# EUROPÄISCHE PATENTSCHRIFT

(11) **EP 3 502 543 B1**
(45) Veröffentlichungstag und Bekanntmachung des Hinweises auf die Patenterteilung: **08.11.2023**
(21) Anmeldenummer: 18214854.4
(22) Anmeldetag: 20.12.2018
(51) Int. Cl.: F21K 9/61, F21V 8/00, G02B 6/00, F21Y 115/10

(54) **FLÄCHIGES ODER STABFÖRMIGES LICHTLEITERELEMENT**
PLANAR OR ROD-SHAPED LIGHT GUIDE ELEMENT
GUIDE DE LUMIÈRE PLAN OU EN FORME DE TIGE

(30) Priorität: 20.12.2017 DE 102017130790
(43) Veröffentlichungstag der Anmeldung: 26.06.2019
(73) Patentinhaber: Trilux GmbH & Co. KG, 59759 Arnsberg (DE)
(72) Erfinder: Dr. Knoche, Sebastian, 59757 Arnsberg (DE); Lewers, Christoph, 59757 Arnsberg (DE)
(74) Vertreter: Lippert Stachow Patentanwälte Rechtsanwälte

(56) Entgegenhaltungen:
- EP-A1- 1 808 716
- EP-A1- 1 881 266
- EP-A2- 2 371 623
- CN-A- 1 609 681
- CN-A- 104 090 326
- DE-A1-102015 103 660
- US-A1- 2008 285 309
- US-A1- 2010 103 696
- US-A1- 2017 329 070

## Beschreibung

Die Erfindung betrifft eine Beleuchtungsanordnung mit einem Leuchtmittel und einem flächigen oder stabförmigen Lichtleiterelement mit sich gegenüber liegenden Hauptflächen und diese verbindenden Schmalseiten, wobei zumindest eine der Schmalseiten zum Einkoppeln von Licht eines, zumindest ein LED-Element umfassendes Leuchtmittels ausgebildet ist, und wobei die zumindest eine Einkoppel-Schmalseite einen dem LED-Element zugeordneten Strukturierungsabschnitt zur Gestaltung einer Einkoppelfläche aufweist.

Bei Beleuchtungsanordnungen kommen insbesondere flächige oder stabförmige Lichtleiterelemente zum Einsatz, um optimal angepasste Lichtaustrittsbereiche zur Vermeidung von Blendungen der sich im Beleuchtungsbereich befindlichen Personen und/oder zur Optimierung einer homogenen Lichtabgabe durch Lichtmischung bereitzustellen. Derartige flächige oder stabförmige Lichtleiterelemente sind häufig als rechteckförmige Lichtleiterelemente ausgebildet, wobei die Hauptseiten eines flächigen bzw. flächenförmigen Lichtleiterelementes auch als sich gegenüber liegende Flachseiten bezeichnet werden, welche durch die Schmalseiten verbunden sind. Die plattenförmigen, d.h. flächigen Lichtleiterelemente werden in Beleuchtungsanordnungen häufig in einer Anordnung verwendet, bei welcher das Licht an zumindest einer der Schmalseiten eingekoppelt und an zumindest einer der Hauptseiten ausgekoppelt wird. Die auch als Längsseiten bzw. Stirnseiten des flächigen Lichtleiters bezeichneten Schmalseiten sind dabei in der Regel erheblich dünner bzw. schmäler als die Abmessungen der Haupt- bzw. Flachseiten. Demgegenüber weist ein stabförmiges Lichtleiterelement eine längliche Struktur auf mit zwei sich gegenüber liegenden Stirnseiten, die in ihrer Fläche erheblich kleiner als die Hauptseiten sind, welche zusammen die Mantelfläche des stabförmigen Lichtleiterelementes darstellen. Auch ein zylinderförmiges Lichtleiterelement kann in diesem Sinne als ein derartiges stabförmiges Leiterelement angesehen werden, wobei die Mantelfläche eine Zylinderfläche darstellt, die in eine Anzahl von umfänglich aufeinanderfolgenden Seitenflächen aufgeteilt sein kann. Häufig werden derartige stabförmige Lichtleiterelemente eingesetzt, um Licht an einer der Stirnseiten einzukoppeln, wobei eine Auskopplung im Mantelbereich und/oder auch an der der Einkoppelstirnseite gegenüberliegenden Stirnseite erfolgen kann.

Derartige Beleuchtungsanordnungen mit Lichtleiterelementen werden häufig in Verbindung mit Leuchtmitteln verwendet, die eine oder mehrere Punktlichtquellen wie LEDs aufweisen können. Zur optimalen Nutzung des von der Lichtquelle abgegebenen Lichtes ist es wesentlich, dass das Licht möglichst vollständig in das Lichtleiterelement eingekoppelt und darüber hinaus innerhalb des Lichtleiterelements eine gute Durchmischung des eingekoppelten Lichtes erzeugt wird. Diese Durchmischung kann wesentlich zur Vermeidung von Farbsäumen bei der Verwendung von mehrfarbigem Licht sein, beispielsweise beim Einsatz von LEDs mit unterschiedlicher spektraler Emission und/oder beim Auskoppeln des Lichtes aus dem Lichtleiterelement, um zu vermeiden, dass das Licht über eine Auskoppelfläche nicht gleichförmig abgegeben wird.

Die Offenlegungsschrift EP 2 371 623 A2 beschreibt ein flächiges Lichtleiterelement und eine zugeordnete Beleuchtungsanordnung, wobei der Lichtleiter sich gegenüberliegende Hauptseiten und diese verbindenden Schmalseiten aufweist. Zumindest eine der Schmalseiten ist als Lichteinkoppelseite für eine Reihe von LED-Elementen ausgebildet, wobei die Lichteinkoppelfläche eben ausgeführt ist. Darüber hinaus weist das flächige Lichtleiterelement an zumindest einer der Hauptflächen eine Strukturierung zur Homogenisierung des Lichtes auf, die in Form einer Rillenstruktur ausgebildet ist. Die Offenlegungsschrift EP 1 808 716 A1 offenbart in einer Ausführungsform eine Lichtleiterplatte und eine zugeordnete Beleuchtungsanordnung mit sich gegenüberliegenden Hauptseiten und diese verbindende Schmalseiten der Lichtleiterplatte, wobei zumindest eine der verbindenden Schmalseiten als Lichteinkoppelseite für eine Reihe von Lichtquellen ausgebildet ist. Die Einkoppelseite weist eine Mehrzahl, jeweils einer Lichtquelle zugeordnete Strukturierungsabschnitte in Form von Diffusionsbereichen auf, wobei das Lichtleiterelement an einer der Hauptflächen eine zweite Strukturierung zur Homogenisierung des Lichtes in Form einer von den Einkoppelflächen ausgehenden Rillenstrukturierung ("dark portion reducing units") umfasst, sodass die jeweilige Hauptfläche zumindest eine rillenförmige Ausnehmung aufweist, deren Begrenzungsfläche als Reflexionsfläche ausgebildet ist. Die Offenlegungsschrift US 2017/329070 A1 betrifft ein lichtemittierendes Modul, umfassend eine Lichtleiterplatte mit einer Vorderfläche, einer der Vorderfläche gegenüberliegende Rückfläche und einer planen Lichteinkoppelfläche, die zwischen der Vorderfläche und der Rückfläche angeordnet ist, mindestens eine Lichtquelle, die sich außerhalb der Lichtleiterplatte befindet und der Lichteinkoppelfläche der Lichtleiterplatte zugewandt ist, sowie ein Helligkeitsanpassungelement, das sich auf der Vorderfläche oder der Rückfläche der Lichtleiterplatte befindet.

Der vorliegenden Erfindung liegt die Aufgabe zugrunde, die Funktion einer herkömmlichen Beleuchtungsanordnung mit einem Lichtleiterelement in Bezug auf die Einkopplung des Lichtes in den Lichtleiter, die Durchmischung des Lichtes innerhalb des Lichtleiterelements zu verbessern. Diese Aufgabe wird erfindungsgemäß mit einer Beleuchtungsanordnung umfassend ein Leuchtmittel und ein flächiges oder stabförmiges Lichtleiterelement mit den Merkmalen von Anspruch 1 gelöst. Die erfindungsgemäße Beleuchtungsanordnung zeichnet sich dadurch aus, dass neben der einen Hauptfläche auch eine dieser gegenüberliegende Hauptfläche eine zweite Strukturierung aufweist zur Homogenisierung des eingekoppelten Lichtes in Form einer von den Einkoppelflächen ausgehenden Rillenstrukturierung und dass das Leuchtmittel mehrere, unterschiedliche Lichtquellen-Arten in Form von Weißlicht-LEDs umfasst, wobei die Weißlicht-LEDs unterschiedliches Weißlicht mit unterschiedlicher Farbtemperatur emittieren.

Bei der erfindungsgemäßen Beleuchtungsanordnung ist vorgesehen, die Mischung bzw. Homogenisierung des Lichtes beim Vorgang der Totalreflexion innerhalb des Lichtleiterelements zu fördern bzw. zu verbessern. Hierzu weist das erfindungsgemä-βe Lichtleiterelement im Anschluss an den zumindest einen, einer Einkoppelfläche zugeordneten Strukturierungsabschnitt in Lichtführungsrichtung bzw. senkrecht zur Einkoppelebene, an zumindest einer der Hauptflächen eine zweite Strukturierung auf in Form einer von den Einkoppelflächen ausgehenden Rillenstrukturierung, bei welcher die jeweilige Hauptfläche zumindest eine rillenförmige Ausnehmung aufweist, deren Begrenzungsfläche als Reflexionsfläche ausgebildet ist.

Die das gleiche Merkmal beschreibenden Angaben "rillenförmige Ausnehmung" bzw. "rinnenförmige Ausnehmung" sind hier breit zu verstehen und können auch als Rinne, Rille, Kerbe, längliche Vertiefung oder Furche bezeichnet werden. Vorzugsweise kann die Begrenzungsfläche der Rillenstrukturierung als Totalreflexionsfläche ausgebildet sein und wirken. Dabei kann vorgesehen sein, die Begrenzungsfläche der Rillenstrukturierung zu polieren, um eine optimale Totalreflexion an der Begrenzungsfläche bereitzustellen. In einer anderen Ausführungsform kann auch vorgesehen sein, die Begrenzungsfläche der Rillenstrukturierung mit einer Reflexionsschicht zu beschichten, um zu verhindern, dass Licht an dieser Rillenstrukturierung in einem erheblichen Umfang das Lichtleiterelement verlässt und damit sicherzustellen, dass das innenseitig auf die Begrenzungsfläche der Rillenstrukturierung fallende Licht, weiter im Lichtleiter geführt ist.

Die beschriebene Lichthomogenisierung durch die Gestaltung zumindest einer rillenförmigen Ausnehmung an zumindest einer der Hauptflächen des Lichtleiterelements kann sich dabei sowohl auf der Strahlrichtung relativ zur Lichtführungsrichtung als auch auf den Ort innerhalb des Leiterelements beziehen.

Die verbesserte Durchmischung des Lichtes innerhalb des Lichtleiterelementes der erfindungsgemäßen Beleuchtungsanordnung ist wesentlich bei der erfindungsgemäßen Beleuchtungsanordnung, bei welcher das Leuchtmittel Weißlicht-LED-Lichtquellen umfasst, die sich in Bezug auf ihre spektrale Emission unterscheiden. Dabei weist die erfindungsgemäße Beleuchtungsanordnung ein Leuchtmittel umfassend mehrere, unterschiedliche Lichtquellen-Arten in Form von Weißlicht-LEDs auf, d.h. LEDs, die Weißlicht mit unterschiedlicher Farbtemperatur emittieren, beispielsweise LEDs die mit einer Farbtemperatur von kleiner 3500 K und LEDs die mit einer Farbtemperatur größer 4500 K abstrahlen. Insbesondere können zwei unterschiedliche Lichtquellen-Arten in Form von Weißlicht-LEDs Verwendung finden, bei welchen die einen LEDs mit einer Farbtemperatur von etwa 2700 K und die anderen LEDs mit einer Farbtemperatur von etwa 6500 K abstrahlen. Zweckmäßigerweise können die zueinander, im Bereich der Einkoppelfläche des Lichtleiterelements angeordneten LEDs so angeordnet sein, dass eine LED einer Lichtquellen-Art jeweils benachbart zu einer LED einer anderen Lichtquellen-Art angeordnet ist. Bei all diesen Ausführungsformen mit unterschiedlichen Lichtquellen-Arten kann durch unabhängiges Ansteuern bzw. Betreiben der Lichtquellen, beispielsweise von LEDs mit einer Farbtemperatur von 2700 K und LEDs mit einer Farbtemperatur von 6500 K, die Farbtemperatur des aus dem Lichtleiter auskoppelbaren Mischlichts gesteuert werden.

Weitere vorteilhafte Weiterbildungen der Erfindung und erfindungsgemäße Merkmale sind in der allgemeinen Beschreibung, den Figuren, der Figurenbeschreibung sowie den Unteransprüchen angegeben.

Das beschriebene Gestalten sowohl der Einkoppel-Schmalseite als auch eines sich daran anschließenden Abschnittes an zumindest einer Hauptfläche zur Homogenisierung des sich im Leiterelement der erfindungsgemäßen Beleuchtungsanordnung ausbreitenden Lichtes kann vorteilhafterweise in einem Herstellungsschritt durchgeführt werden, da sich beide Abschnitte in direkter Nachbarschaft zueinander befinden bzw. diese sich aneinander anschließen können.

Um eine ausreichende Homogenisierung in Bezug auf die Totalreflexion im Bereich der zweiten Strukturierung, die sich an zumindest einer der Hauptflächen befindet, sicherzustellen, kann zweckmäßigerweise vorgesehen sein, dass die rillenförmige Ausnehmung über eine vorgegebene Erstreckung in Lichtführungsrichtung bzw. senkrecht zur Einkoppelebene verläuft, beispielsweise einer Erstreckung, die mindestens das Zehnfache, vorzugsweise mindestens das Fünffache eines Erstreckungsmaßes eines Leuchtmittelelements wie einer LED aufweist.

Vorzugsweise kann die Tiefe und/oder die Breite der rillenförmigen Ausnehmung in ähnlicher Weise an ein Erstreckungsmaß des LED-Elements, wie beispielsweise dessen Länge oder Breite, angepasst sein. Die Breite bzw. Tiefe einer solchen rillenförmigen Ausnehmung kann insbesondere etwa einem solchen Erstreckungsmaß eines LED-Elements entsprechen, in einer anderen Ausführungsform dem Zwei- bis Dreifachen.

Vorzugsweise kann die rillenförmige Ausnehmung geradlinig verlaufen, wobei die Rillenachse etwa parallel zur Lichtführungsrichtung des Lichtleiterelements bzw. parallel zu einer seiner Schmalseiten ausgerichtet sein kann.

Die Begrenzungsfläche der rillenförmigen Ausnehmung kann zweckmäßigerweise im Querschnitt senkrecht zur Längsrichtung einen Kegelschnitt umfassen, beispielsweise auch zylinderförmig ausgebildet sein. Vorzugsweise ist die rillenförmige Strukturierung an zumindest einer der Hauptseiten konkav ausgebildet, um die Durchmischung des Lichtes durch die Totalreflexion an der konkaven Strukturierung zumindest einer der Hauptflächen bzw. -seiten in einem dem Einkoppelbereich sich anschließenden Abschnitt des Lichtleiterelements zu verbessern.

Die rillenförmige Ausnehmung kann in Bezug auf ihre Begrenzungsflächen selbst eine Mikrostrukturierung, beispielsweise in Form einer Wellenstrukturierung zur weiteren Verbesserung der Homogenisierung des an der Innenseite der Ausnehmung totalreflektierten Lichtes aufweisen.

Grundsätzlich kann die Lichtführungsrichtung des Lichtleiterelements der erfindungsgemäßen Beleuchtungsanordnung parallel zu einer Kante des Lichtleiterelements verlaufen, bei einem stabförmigen Element verläuft diese Lichtführungsrichtung in Längsrichtung des Elementes.

Die rillenförmige Strukturierung an zumindest einer der Hauptseiten im Einkoppelbereich des Lichtleiterelements kann in Form zumindest einer Rille mit vorgegebener Höhe bzw. Tiefe in die Hauptfläche über eine vorgegebene Erstreckung in Lichtführungsrichtung verlaufen, sodass sich ein stufiger Absatz am Ende einer solchen Rille in der jeweiligen Hauptfläche ergibt. In einer weiteren Ausführungsform kann jedoch auch vorgesehen sein, dass sich die Tiefe einer solchen Rille im Laufe ihrer Erstreckung in Lichtführungsrichtung kontinuierlich vermindert und quasi in die Hauptfläche einläuft bzw. übergeht, sodass ein kontinuierlicher Übergang zwischen der die jeweilige Rille begrenzenden Oberfläche und der jeweiligen Hauptfläche eingestellt ist.

Es kann zweckmäßigerweise vorgesehen sein, dass die Rillenstrukturierung im Bereich des Einkoppelabschnittes eine Mehrzahl von rillenförmigen Ausnehmungen aufweist, deren Längsachsen parallel zueinander verlaufen können. Jede einzelne dieser rillenförmigen Ausnehmungen kann wie für eine einzelne rillenförmige Ausnehmung obenstehend erläutert ausgebildet sein, sodass durch diese Maßnahme jedem der Lichtelemente ein Strukturierungsabschnitt an zumindest einer der Hauptflächen zugeordnet und hierzu ausgebildet ist, um eine bessere Durchmischung des Lichtes der jeweiligen Leuchtquelle zu erreichen.

In einer besonderen Ausbildung kann auch vorgesehen sein, dass die Längsachsen der im Bereich des Einkoppelabschnittes vorgesehenen Mehrzahl von rillenförmigen Ausnehmungen nichtparallel zueinander ausgerichteten sind.

Erfindungsgemäß ist vorgesehen, bei einem flächigen Lichtleiterelement oder einem stabförmigen Lichtleiterelement im Einkoppelbereich an zwei gegenüber liegenden Hauptflächen bzw. -seiten eine solche Rillenstrukturierung vorzusehen zur weiteren Verbesserung der Lichtdurchmischung, wobei in dieser Ausführungsform ein Lichtstrahl zunächst an einer, an einer Grenzfläche angeordneten Rillenstrukturierung reflektiert, insbesondere totalreflektiert, und nachfolgend an einer, an einer der ersten gegenüberliegenden Grenzfläche angeordneten Rillenstrukturierung reflektiert, insbesondere totalreflektiert wird. Insbesondere kann dabei vorgesehen sein, dass beide Hauptflächen bzw. Grenzflächen eine zu einer Mittelebene, die parallel zur zumindest einer der Hauptflächen verläuft, symmetrische, insbesondere spiegelsymmetrische Rillenstrukturierungen aufweist. In einer besonderen Ausführungsform kann vorgesehen sein, dass die Rillenstrukturierungen an beiden Hauptflächen etwa senkrecht zur Längserstreckung der rillenförmigen Ausnehmungen zueinander phasenverschoben sind, beispielsweise derart, dass ein zwischen zwei rillenförmigen Ausnehmungen angeordneter Steg als Abschnitt der jeweiligen Hauptfläche einer rillenförmigen Ausnehmung an der anderen Hauptfläche gegenüberliegt zur weiteren Verbesserung der Lichtdurchmischung.

Insbesondere bei einem stabförmigen Lichtleiterelement kann zweckmäßigerweise vorgesehen sein, zumindest eine der Grenzflächen des Lichtleiterelements im Wesentlichen über dessen gesamte Längserstreckung im Querschnitt konkav auszubilden, wobei auch vorgesehen sein kann, eine Mehrzahl dieser Grenzflächen konkav auszubilden. Beispielsweise kann bei einem stabförmigen Lichtleiterelement vorgesehen sein, alle die Mantelfläche des Leiterelements festlegenden Seitenflächen über ihre gesamte Längserstreckung konkav auszubilden zur Verbesserung der Lichtmischung aufgrund der Totalreflexion an diesen Grenzflächen während der Lichtleitung, wobei die Einkoppel-Schmalseite und die Auskoppel-Schmalseite jeweils für das Einkoppeln des Lichtes bzw. Auskoppeln des Lichtes optimiert gestaltet sein können. Eine solche konkave Ausgestaltung zumindest einer oder mehrerer Grenzflächen des Lichtleiterelements ist auch bei einem plattenförmigen Lichtleiterelement ausführbar, insbesondere dadurch, dass zumindest eine oder mehrere der Schmalseiten des Lichtleiterelements über deren Erstreckung in Lichtführungsrichtung im Querschnitt konkav ausgebildet sein können.

Besonders zweckmäßig kann bei einem stabförmigen Lichtleiterelement auch eine Gestaltung vorgesehen sein, bei welcher zum einen zumindest eine, oder auch mehrere bzw. alle, der Grenzflächen des Lichtleiterelements im Wesentlichen über dessen gesamte Längserstreckung im Querschnitt konkav ausgebildet und die Längsachse des Lichtleiters zumindest abschnittsweise gekrümmt ist, wodurch die Anzahl der Totalreflektionen und damit die Lichtdurchmischung bei der Transmission von Licht durch den Lichtleiter weiter verbessert wird.

Um die Durchmischung des Lichtes innerhalb des Lichtleiterelements im Bereich einer Auskoppelfläche zu verbessern, kann erfindungsgemäß vorgesehen sein, dass die Auskoppelfläche zumindest einen spitz nach innen zulaufenden, V-förmigen Einschnitt aufweist. Insbesondere in solchen Anwendungen, bei welchen ein einzelner V-förmiger Einschnitt in der Auskoppelfläche vorgesehen ist, kann dieser etwa mittig zur Auskoppelfläche angeordnet sein, so dass Licht, welches in diesem Bereich etwa parallel zur Lichtführungsrichtung verläuft, an der Einschnitt-Mantelfläche zumindest teilweise totalreflektiert wird, so dass der Lichtanteil, welcher im Mittenbereich der Auskoppelfläche auftrifft und das Lichtleiterelement verlässt, reduziert werden kann. Der Einschnitt kann in einer Ausführungsform kegelförmig ausgebildet sein, wobei sich die Kegelachse parallel zur Lichtführungsrichtung erstrecken kann, so dass der durch den Einschnitt eingestellte Mischeffekt symmetrisch zur Lichtführungsrichtung ist.

In einer vorteilhaften Weiterbildung kann vorgesehen sein, dass die Auskoppelfläche neben der beschriebenen kegelförmigen Mantelfläche eine konvexe Ringfläche aufweist, die sich von der kegelförmigen Mantelfläche radial nach außen bis auf die, z.B. kreisförmige, Seitenbegrenzung des Lichtleiterelements erstreckt. Die konvexe Ringfläche kann eine Kollimation der in diesem Bereich austretenden Lichtstrahlen bereitstellen.

Die vorstehend diskutierten Gestaltungen des flächigen oder stabförmigen Lichtleiterelementes der erfindungsgemäßen Beleuchtungsanordnung unterstützen das Mischen des Lichtes beim Vorgang der Totalreflektion innerhalb des Leiterelementes, insbesondere unmittelbar nach der Einkopplung des Lichtes in das Leiterelement. Darüber hinaus kann beim flächigen oder stabförmigen Lichtleiterelement der erfindungsgemäßen Beleuchtungsanordnung vorgesehen sein, die Mischung bzw. Homogenisierung des Lichtes schon beim Eintritt bzw. der Einkopplung in das Leiterelement durch die Beeinflussung der Brechung des Lichtes zu fördern bzw. zu verbessern. Hierzu kann zweckmäßigerweise vorgesehen sein, dass die Einkoppelfläche eine Neigung zu einer Einkoppelebene aufweist, die in einem Zentralbereich zwischen den Hauptflächen, ausgehend von einer Mittelebene in Richtung zu einer der Hauptflächen abnimmt, wobei der Neigungswinkel im Bereich der Mittelebene im Intervall von ≥ 25° bis 90° liegt.

Es sei darauf hingewiesen, dass der angegebene Neigungswinkel im Bereich der Mittelebene innerhalb der angegebenen Intervallgrenzen variieren kann, jedoch je nach Ausführungsform die jeweiligen Intervallgrenzen nicht erreichen muss.

Dieser Weiterbildung des flächigen oder stabförmigen Lichtleiterelementes liegt die grundsätzliche Idee zugrunde, zunächst für eine verbesserte Durchmischung des Lichtes innerhalb des Lichtleiterelementes dadurch zu sorgen, dass das Licht für die nachfolgende Lichtführung innerhalb des Lichtleiters optimiert eingekoppelt wird, nämlich so, dass im zentralen Bereich der Einkopplung flache Strahlen, d.h. mit einem geringen Winkel oder parallel zu einer Hauptseite bzw. -fläche verlaufende Strahlen innerhalb des Lichtleiters vermieden werden. Dies erreicht diese vorteilhafte Ausführungsform dadurch, dass im zentralen Bereich der Einkopplung die Einkoppelfläche zu einer Einkoppelebene eine vergleichsweise große Neigung besitzt, sodass Lichtstrahlen bei der Einkopplung in Richtung zu den bzw. der Hauptseite gebrochen werden, sodass sie zur Bereitstellung der Lichtführungseigenschaften des Lichtleiterelementes an diesen reflektiert, insbesondere totalreflektiert werden können. Demgegenüber kann Licht, das näher zu der bzw. den Hauptseiten eingekoppelt wird, innerhalb des Lichtleiterelements flacher verlaufen, sodass die Neigung der Einkoppelfläche zur Einkoppelebene in Richtung zu der bzw. den Hauptflächen abnehmen kann. Damit können auch im Wesentlichen quer verlaufende Strahlen durch Brechung in den Lichtleiter eingekoppelt und in Winkel gebrochen werden, die eine Totalreflexion innerhalb des Lichtleiterelements zur Transmission des Lichtes in eine Lichtführungsrichtung zulassen. Dadurch, dass mit der Gestaltung der Einkoppel-Schmalseite der überwiegende Anteil des eingekoppelten Lichtes so in das Lichtleiterelement hineingebrochen wird, dass es einen Winkel ungleich Null zur Lichtführungsrichtung aufweist, wird sichergestellt, dass das auch in dem Zentralbereich der Einkoppelfläche eingekoppelte Licht im Laufe der Transmission durch das Lichtleiterelement totalreflektiert und damit weiter vermischt wird. Das Lichtleiterelement der erfindungsgemäßen Beleuchtungsanordnung kann insofern den Anteil des Lichtes, der parallel zur Lichtführungsrichtung innerhalb des Lichtleiterelementes transmittiert, vermeiden bzw. wesentlich vermindern, sodass insbesondere bei einer nachfolgenden Auskopplung des Lichtes eine inhomogene Lichtabgabe über die Auskoppelfläche vermieden werden kann.

Darüber hinaus kann mit der Gestaltung eines Lichtleiterelementes der erfindungsgemäßen Beleuchtungsanordnung für Ausführungsformen, bei welchen eine Auskopplung des Lichtes an einer oder beiden Hauptseiten erfolgt, die Effizienz des optischen Systems umfassend das Leuchtmittel und das Lichtleiterelement optimiert werden, da mit der Gestaltung des Lichtleiterelement ein hoher Anteil des Lichtes zwischen den Hauptzeiten reflektiert wird und somit für eine Auskopplung zur Verfügung steht.

Die Angabe "Mittelebene" kann im Bereich der Mitte zwischen Hauptflächen angeordnet sein bzw. liegen. Dabei kann die Mittelebene als Winkelhalbierende zwischen sich gegenüberliegenden Hauptseiten festgelegt werden, die durch eine Schnittlinie der Hauptseiten verläuft, insbesondere eine "virtuelle" Schnittlinie, die bei einer Verlängerung der Hauptseiten entstehen würde. In Falle von zwei parallel zueinander verlaufenden, ebenen Hauptseiten schneiden diese sich im Unendlichen, sodass hier die Mittelebene in der Mitte zwischen den Hauptseiten und parallel zu diesen verläuft. In einer Ausführungsform kann diese Mittelebene auch eine Symmetrieebene zwischen Hauptseiten sein, beispielsweise eine Symmetrieebene zwischen zwei ebenen Hauptseiten. Es sei darauf hingewiesen, dass die Mittelebene nicht ideal in der Mitte zwischen Hauptflächen liegen muss, sondern nur in einem Bereich der Mitte zwischen den Hauptflächen.

In einer Ausführungsform ist die Angabe "im Bereich der Mittelebene" mit der Angabe "an der Mittelebene", in einer anderen Ausführungsform mit der Angabe "im Zentralbereich" gleichzusetzen.

Die Angabe "Einkoppelebene" bezeichnet eine Ebene, die sich senkrecht zu der Mittelebene im Bereich der Einkoppel-Schmalseite bzw. im Strukturierungsabschnitt der Einkoppel-Schmalseite erstrecken kann. In solchen Ausführungsformen, bei welchen Hauptseiten des Lichtleiters eben und parallel zueinander verlaufen, verläuft insofern eine Einkoppelebene senkrecht zu diesen Hauptseiten.

Zweckmäßigerweise kann die angegebene Neigung bzw. der Neigungswinkel der Einkoppelfläche zur Einkoppelebene in einer Schnittebene senkrecht zur Mittelebene und senkrecht zur Einkoppelebene liegen. Insbesondere kann im Falle von zueinander parallelen, ebenen Hauptseiten die angegebene Neigung bzw. der Winkel der Einkoppelfläche zur Einkoppelebene in einer Schnittebene senkrecht zu einer Hauptseite und parallel zur Längserstreckung des Lichtleiterelementes liegen bzw. senkrecht zu einer der Hauptflächen und parallel zu einer Hauptstrahlrichtung des Leuchtmittels bzw. der LED, wobei Hauptstrahlrichtung die Richtung mit der größten Lichtabstrahlung meint. In einer weiteren Festlegung kann der angegebene Neigungswinkel der Einkoppelfläche zur Einkoppelebene in einer Schnittebene senkrecht zu einer Hauptseite und parallel zu einer vorgegebenen Lichtführungsrichtung des Lichtleiters liegen, wobei die Lichtführungsrichtung die Richtung von der Einkoppelfläche zu einer Auskoppelfläche des Lichtleiters angibt.

In einer Ausführungsform des Lichtleiterelements der erfindungsgemäßen Beleuchtungsanordnung kann vorgesehen sein, dass der Neigungswinkel der Einkoppelfläche zu einer Einkoppelebene im Bereich der Mittelebene im Intervall von ≥ 25° bis 65°, insbesondere im Intervall von ≥ 25° bis 50° liegt. In einer weiteren Ausführungsform kann vorgesehen sein, dass der Neigungswinkel der Einkoppelfläche zu einer Einkoppelebene im Bereich der Mittelebene im Intervall von ≥ 35° bis 65°, insbesondere im Intervall von ≥ 35° bis 50° liegt. In einer anderen Ausführungsform kann vorgesehen sein, dass der Neigungswinkel der Einkoppelfläche zu einer Einkoppelebene im Bereich der Mittelebene im Intervall von ≥ 20° bis 60°, insbesondere im Intervall von ≥ 20° bis 60° liegt.

Das Lichtleiterelement kann aus einem transparenten Kunststoffmaterial wie beispielsweise PC oder PMMA hergestellt sein und je nach Material einen Brechungsindex n zwischen etwa 1,45 und 1,6 aufweisen. Zumindest ein Teil der beschriebenen Strukturierungen am Lichtleiterelement kann schon beim Herstellungsprozess durch Spritzgießen durch entsprechende Formengestaltung erzeugt werden, darüber hinaus kann auch eine nachfolgende Strukturierung, beispielsweise mittels spannabhebende Bearbeitung erfolgen.

Das flächige oder stabförmige Lichtleiterelement kann in einer erfindungsgemäßen Beleuchtungsanordnung so eingesetzt werden, dass in einer Variante von Ausführungen zumindest eine der Hauptflächen, an welchen das Licht zur Lichtführung zumindest teilweise totalreflektiert wird, auch zum Auskoppeln zumindest eines Teils des eingekoppelten Lichtes ausgebildet sein kann. Hierzu kann beispielsweise eine Hauptfläche an ihrer Oberfläche entsprechend strukturiert, beispielsweise aufgeraut oder anderweitig strukturiert oder beschichtet sein, um ein Austreten des ansonsten totalreflektierten Lichtes an der betreffenden Hauptfläche zu erlauben. In einer weiteren Art von Anwendungen, insbesondere bei einem stabförmigen Lichtleiterelement, kann auch eine der Seitenflächen zur Auskopplung des eingekoppelten Lichtes ausgebildet sein, beispielsweise bei einem reinen Lichtmischstab zum Führen und Durchmischen des Lichtes ausgehend vom Einkoppelort zum Auskoppelort, die beispielsweise durch zwei Seiten-, d.h. Stirnflächen des Lichtmischstabs bereitgestellt werden können.

Je nach spezifischer Anwendung kann die Neigung der Einkoppelfläche zur Einkoppelebene ausgehend von der Mittelebene bis zu der bzw. den Hauptseiten variieren. Eine wesentliche Größe ist dabei der Erstreckungsbereich des Zentralbereichs, innerhalb dessen der Neigungswinkel ausgehend von der Mittelebene in Richtung zu einer der beiden Hauptflächen abnimmt und gleichzeitig innerhalb der jeweiligen Intervallgrenzen, z.B. 25° und 65°, verbleibt. Je nach Ausführungsform kann dieser Mittenbereich, der auch als Zentralbereich bezeichnet werden kann, ausgehend von der Mittelebene in Richtung zu einer der Hauptseiten sich über eine Distanz von etwa ein Viertel oder ein Fünftel eines Abstandes zwischen den Hauptflächen erstrecken. In einer anderen Ausführungsform kann sich der Mittenbereich über eine Distanz erstrecken, die innerhalb eines Intervalls von einem Viertel bis zwei Fünftel des Abstandes von der Mittelebene zu der Hauptseite liegt. In anderen Ausführungsformen kann dieser Mittenbereich an die Ausdehnung der jeweiligen Lichtquelle, wie beispielsweise eine LED angepasst sein und beispielsweise die Hälfte einer LED-Erstreckung, wie Länge oder Breite der LED, umfassen, wobei vorzugsweise die LED in der zusammengesetzten Beleuchtungsanordnung von Lichtleiterelement und Leuchtmittel zur Mittelebene ausgerichtet sein kann.

Insbesondere in solchen Anwendungen, bei welchen das Leuchtmittel, insbesondere eine oder mehrere LEDs, mittig zur Einkoppel-Schmalseite angeordnet ist bzw. sind, kann zweckmäßigerweise die Einkoppelfläche der Einkoppel-Schmalseite zur Mittelebene spiegelsymmetrisch ausgebildet sein, sodass sich ausgehend von der Mittelebene in Richtung zu einer Hauptfläche jeweils ein Mittenbereich erstreckt. Damit sind in dieser Ausführungsform zwei aneinander angrenzende Mittenbereiche vorgesehen, die einen zwischen Hauptflächen liegenden Gesamtmittenbereich bilden, innerhalb dessen die Neigung der Einkoppelfläche zu einer Einkoppelebene ausgehend von der Mittelebene abnimmt. In einer anderen Ausführungsform kann jedoch auch vorgesehen sein, den Neigungswinkel der Einkoppelfläche zur Einkoppelebene ausgehend von der Mittelebene zu einer Hauptfläche anders zu gestalten als der zu einer anderen Hauptfläche. Eine solche Gestaltung kann insbesondere zweckmäßig sein, wenn das Leuchtmittel, beispielsweise eine LED unsymmetrisch zur Mittelebene angeordnet bzw. geometrisch und/oder in Bezug auf ihre Abstrahlcharakteristik ausgebildet ist.

Der Verlauf des Neigungswinkels der jeweiligen Einkoppelfläche zur Einkoppelebene, ausgehend von der Mittelebene im Mittenbereich in Richtung zu einer Hauptfläche, kann abgestuft, jedoch auch kontinuierlich ausgeführt sein. Während in der Regel eine kontinuierliche Anpassung der Neigung zweckmäßig ist, kann herstellungsbedingt ein fein abgestufter Verlauf der Neigung der Einkoppelfläche zur Einkoppelebene vorgesehen sein. Beispielsweise kann der Verlauf der Einkoppelfläche in einer vorgegebenen Ebene einen Kegelschnittabschnitt aufweisen bzw. sich aus einer Mehrzahl von aufeinander folgenden Kegelschnittabschnitten zusammensetzen. Ein solcher Verlauf der Einkoppelfläche in einer vorgegebenen Ebene stellt insofern eine Schnittlinie in der vorgegebenen Ebene dar, wobei diese vorgegebene Ebene durch eine Flächennormale von einer der Hauptseiten des Lichtleiterelementes und einer Flächennormale zur Einkoppelebene gebildet ist. In einer Ausführungsform kann diese Flächennormale zur Einkoppelebene einer Flächennormale auf eine der Einkoppelfläche zugeordnete LED entsprechen.

In einer Ausführungsform kann die jeweilige Einkoppelfläche eines Strukturierungsabschnittes konvex ausgebildete Abschnitte aufweisen bzw. aus konvex ausgebildeten Abschnitten zusammengesetzt sein. Insbesondere bei solchen Ausführungsformen, bei welchen die Mittelebene eine Spiegelsymmetrieebene für die jeweilige Einkoppelfläche eines Strukturierungsabschnittes darstellt, kann die Einkoppelfläche eine Einwölbung aufweisen mit jeweils zwei konvexen Kurvenabschnitten, die spitz zulaufen und sich in der vorgegebenen Ebene in einem Mittenpunkt schneiden, derart, dass sie eine nach innen des Lichtleiterelements weisende V-förmige Spitze ausbilden. Bei dieser Gestaltung kann das jeweilige Leuchtmittel, beispielsweise eine LED im Bereich bzw. innerhalb der Einwölbung angeordnet werden, sodass im Wesentlichen das gesamte in den Raumbereich emittierte Licht auf die Einkoppelfläche trifft und von dieser in das Lichtleiterelement hineingebrochen werden kann.

In einer weiteren Ausführungsform kann auch vorgesehen sein, dass die jeweilige Einkoppelfläche eines Strukturierungsabschnitts einen konkav ausgebildeten Abschnitt umfasst bzw. aus konkav ausgebildeten Abschnitten zusammengesetzt ist. Bei einer zur Mittelebene symmetrischen Gestaltung der jeweiligen Einkoppelfläche resultiert eine Gestalt des Lichtleiterelements im Bereich der Einkoppelseite, welche unter Umständen die Verwendung eines Reflektors im Außenbereich von Lichtleiterelement und LED ermöglicht, um das gesamte von der Lichtquelle emittierte Licht auf die jeweilige Einkoppelfläche zu werfen.

Um sicherzustellen, dass möglichst ein Großteil des von dem jeweiligen Lichtmittel, beispielsweise zumindest einem LED-Element emittierten Lichtes in das Lichtleiterelement eingekoppelt wird, kann zweckmäßigerweise vorgesehen sein, dass die jeweilige Einkoppelfläche des Strukturierungsabschnitts als Bodenfläche einer Ausnehmung in der Einkoppel-Schmalseite des Lichtleiterelements ausgebildet ist. Dabei kann die Ausnehmung zur zumindest abschnittsweisen Aufnahme des LED-eines Leuchtmittels, insbesondere eines zugeordneten LED-Elements, so ausgebildet sein, dass das Leuchtelement von Abschnitten des Lichtleiterelements umgeben ist und damit ein möglichst großer Anteil des emittierten Lichtes auf die Einkoppelfläche des Lichtleiterelementes auftrifft.

Um den Wirkungsgrad bei der Aufnahme des Lichtes in das Lichtleiterelement nochmals zu erhöhen, kann zweckmäßigerweise vorgesehen sein, dass sich an die Ausnehmung eines jeweiligen Strukturierungsabschnitts etwa parallel zu den benachbarten Hauptflächen des Lichtleiterelements verlaufende und sich darin übergehende Endabschnitte anschließen, oder die Ausnehmung entsprechende Seitenflächen aufweist. Diese Endabschnitte oder Übergangsabschnitte können etwa parallel zu den Hauptflächen verlaufende weitere Einkoppelflächen bereitstellen, wobei das über die weiteren Einkoppelflächen in das Lichtleiterelement eingekoppelte Licht zumindest teilweise zum Führen des Lichtes innerhalb des Lichtleiterelements reflektiert werden kann. Vorzugsweise kann dabei vorgesehen sein, dass die sich an die Hauptseiten anschließenden Endabschnitte oder Übergangsabschnitte an ihrer Außenseite eine nach innen zur Mitte des Lichtleiterelementes gerichtete Krümmung aufweisen, um das an den weiteren Einkoppelflächen aufgenommene Licht an diesen gekrümmten Grenzflächen möglichst in einen spitzen Winkel zur Lichtführungsrichtung über den Prozess der Totalreflexion zu richten.

Das flächige oder stabförmige Lichtleiterelement der erfindungsgemäßen Beleuchtungsanordnung kann grundsätzlich für eine Vielzahl von Weißlicht-LED-Leuchtmitteln vorgesehen sein, wobei ein diesen LED-Elementen zugeordneter Strukturierungsabschnitt zur Gestaltung einer zugeordneten Einkoppelfläche ausgebildet sein kann. Das flächige oder stabförmige Lichtleiterelement der erfindungsgemäßen Beleuchtungsanordnung ist jedoch auch skalierbar, insbesondere auf ein Leuchtmittel anpassbar, das eine Mehrzahl von LED-Elementen aufweist, wobei ein jeweiliger Strukturierungsabschnitt jeweils einem der LED-Elemente zugeordnet sein kann zur Gestaltung einer dem jeweiligen LED-Element zugeordneten Einkoppelfläche. Insofern ist das erfindungsgemäße flächige oder stabförmige Lichtleiterelement auf die spezifische Gestaltung des Leuchtmittels anpassbar, wobei die geometrische Anordnung der LEDs eine daran angepasste Anordnung der Strukturierungsabschnitte zur Gestaltung der jeweiligen Einkoppelfächen nach sich zieht. In dieser Weise ist das flächige oder stabförmige Lichtleiterelement der erfindungsgemäßen Beleuchtungsanordnung beispielsweise an eine kreisförmige Anordnung von LED-Elementen oder auch an eine Mehrzahl von geometrisch voneinander beabstandeten und insbesondere in Reihe angeordneten LED-Elemente anpassbar. In solchen Fällen, bei welchen das Leuchtmittel eine Mehrzahl geometrisch voneinander beabstandete und in Reihe angeordnete LED-Elemente umfasst, kann das flächige oder stabförmige Lichtleiterelement für jede der LED-Elemente aus der Mehrzahl der LED-Elemente ein jeweiliger Strukturierungsabschnitt aufweisen zur Gestaltung einer jeweiligen Einkoppelfläche und zum Einkoppeln von Licht der jeweiligen LED in die zumindest eine Einkoppel-Schmalseite. Die Strukturierungsabschnitte können dabei jeweilig wie vorstehend beschrieben ausgebildet und zumindest für einen Teil der Mehrzahl der LED-Elemente identisch aufgebaut sein. Insofern können die Strukturierungsabschnitte an der Einkoppel-Schmalseite in Reihe angeordnet sein.

Um das Licht der LED-Elemente auch in Bezug auf eine Richtung senkrecht zu einer Hauptseite zu homogenisieren, können die jeweiligen Einkoppelflächen der jeweiligen Strukturierungsabschnitte so gestaltet sein, dass sie in einer Mehrzahl von Ebenen parallel zu einer Hauptfläche bzw. zur Mittelebene, insbesondere in der Mittelebene des Lichtleiterelements, eine Einwölbung aufweisen mit jeweils zumindest zwei konvexen Kurvenabschnitten, die, insbesondere nach innen, spitz zulaufen und sich in einem Punkt schneiden.

In einer anderen Ausführungsform können die Einkoppelflächen der jeweiligen Strukturierungsabschnitte so gestaltet sein, dass sie in einer Mehrzahl von Ebenen parallel zur Mittelebene, insbesondere in der Mittelebene des Lichtleiterelements, eine Auswölbung aufweisen mit jeweils zumindest zwei konkaven Kurvenabschnitten, die, insbesondere nach außen, spitz zulaufen und sich in einem Punkt schneiden.

In einer weiteren Ausführungsform können die jeweiligen Einkoppelflächen der jeweiligen Strukturierungsabschnitte so gestaltet sein, dass sie in einer Mehrzahl von Ebenen parallel zur Mittelebene, insbesondere in der Mittelebene des Lichtleiterelements, in einer Mehrzahl von Ebenen parallel zur Mittelebene, insbesondere in der Mittelebene des Lichtleiterelements, eine Wellenform aufweisen mit sich abwechselnden und einander anschließenden Auswölbungen und Auswölbungen. In einer weiteren Ausführungsform kann diese Wellenform durch jeweilige gerade Abschnitte angenähert sein, welche sich einander anschließen und jeweils spitz zulaufende Schnittpunkte bilden.

Je nach Ausführungsform kann über die gesamte Längserstreckung der Einkoppelfläche zwischen Hauptflächen in diesen Ebenen ein Verlauf der Einkoppelfläche vorgesehen sein, der sich durch eine Vielzahl derartiger konvexer, konkaver und/oder gerader Kurvenabschnitten zusammensetzt, wobei jeweils zwei benachbarte Kurvenabschnitte sich schneiden können. Durch diese Gestaltung der Einkoppelfläche kann das Licht mehrerer LED-Elemente auch in Bezug auf eine Richtung senkrecht zu einer Hauptseite homogenisiert werden, wodurch z.B. das Licht einer Mehrzahl von in Reihe angeordneten und beabstandeten LEDs in Richtung dieser Reihe "verschmiert" wird, um für einen Benutzer einer mit dem Lichtleiterelement der erfindungsgemäßen Beleuchtungsanordnung ausgestatteten Leuchte den Lichteindruck eines Linienstrahlers bereitzustellen.

Die Erfindung betrifft ferner eine Beleuchtungsanordnung mit einer zusammengesetzten Lichtführungseinrichtung, die sich aus einer Mehrzahl von obenstehend beschriebenen flächigen oder stabförmigen Lichtleiterelementen zusammensetzt, wobei diese miteinander verbunden sein können, derartige, dass diese im Wesentlichen lückenlos, insbesondere in Form einer platonischen Parkettierung angeordnet sind. Eine derartige zusammengesetzte Lichtführungseinrichtung kann jeweils Lichtleiterelemente umfassen, die im Querschnitt beispielsweise dreieckig, viereckig oder sechseckig ausgebildet sein können.

Die Erfindung wird im Folgenden durch das Beschreiben einiger Ausführungsformen unter Bezugnahme auf die beiliegenden Zeichnungen erläutert, wobei
- Figur 1a: eine erste Ausführungsform eines flächigen Lichtleiterelements einer erfindungsgemäßen Beleuchtungsanordnung in einer Seitendarstellung,
- Figur 1b: einen Ausschnitt des Lichtleiterelements gemäß Figur 1a zur Beschreibung der Gestaltung des Einkoppelbereichs,
- Figur 2a: eine weitere Ausführungsform eines flächigen Lichtleiterelements der erfindungsgemäßen Beleuchtungsanordnung in einer Seitenansicht,
- Figur 2b: einen Ausschnitt des Lichtleiterelements der erfindungsgemäßen Beleuchtungsanordnung gemäß Figur 2a zur Beschreibung der Gestaltung des Einkoppelbereichs,
- Figur 3: eine abgewandelte Ausführungsform eines Lichtleiterelements zur Ausführungsform der Figur 2a in einer Seitenansicht,
- Figur 4: eine weitere erfindungsgemäße Ausführungsform eines flächigen Lichtleiterelements mit einer zur Ausführungsform der Figur 3 geänderten Einkoppelfläche,
- Figur 5a, 5b, 5c, 5d: eine jeweilige schräge Stirnseitenansicht für verschiedene Ausführungsformen eines flächigen Lichtleiterelements mit Ansicht auf die jeweilige Strukturierung des Einkoppelbereichs,
- Figur 6a: eine erste Variante eines stabförmigen Lichtleiterelements in einer Schrägansicht auf den Einkoppelbereich,
- Figur 6b: eine weitere Ausführungsform eines stabförmigen Lichtleiterelements in einer Schrägansicht auf den Einkoppelbereich,
- Figur 7a: eine weitere Ausführungsform eines flächigen Lichtleiterelements mit einer Strukturierung eines sich an den Einkoppelbereich anschließenden Abschnitts der beiden Hauptflächen in einer Schrägansicht,
- Figur 7b: in einer Frontalansicht und einer Aufsicht das Lichtleiterelement der Figur 7a zusammen mit einer Mehrzahl von LED-Elementen,
- Figur 7c: drei beispielhafte Gestaltungen von Ausnehmungen an den Hauptflächen für die in Figur 7a gezeigte Rillenstrukturierung,
- Figur 8a: eine weitere Ausführungsform eines erfindungsgemäßen stabförmigen Lichtleiterelements mit einem V-förmigen Einschnitt im Auskoppelbereich in einer Schnittdarstellung parallel zur Längsachse des stabförmigen Lichtleiterelements im Ausschnitt,
- Figur 8b: eine zur Ausführungsform der Figur 8a abgewandelte Ausführungsform eines stabförmigen Lichtleiterelements mit einem V-förmigen Einschnitt im Auskoppelbereich in einer Schnittdarstellung parallel zur Längsachse des stabförmigen Lichtleiterelements im Ausschnitt, und
- Figur 8c: die Anordnung einer Mehrzahl von miteinander verbundenen stabförmigen Lichtleiterelementen der Fig. 8b zur Bereitstellung einer lückenlosen Auskoppelfläche zeigt.

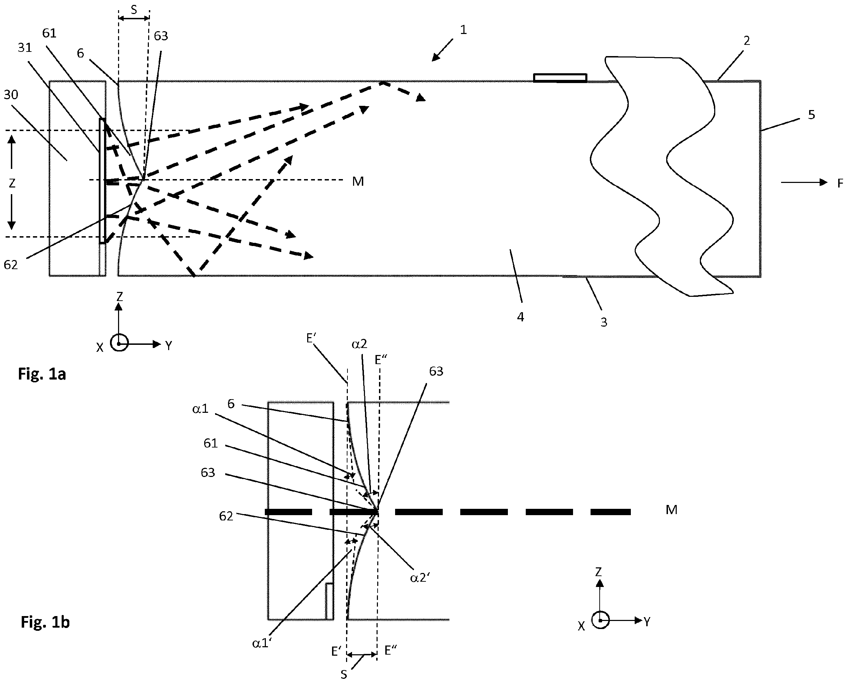

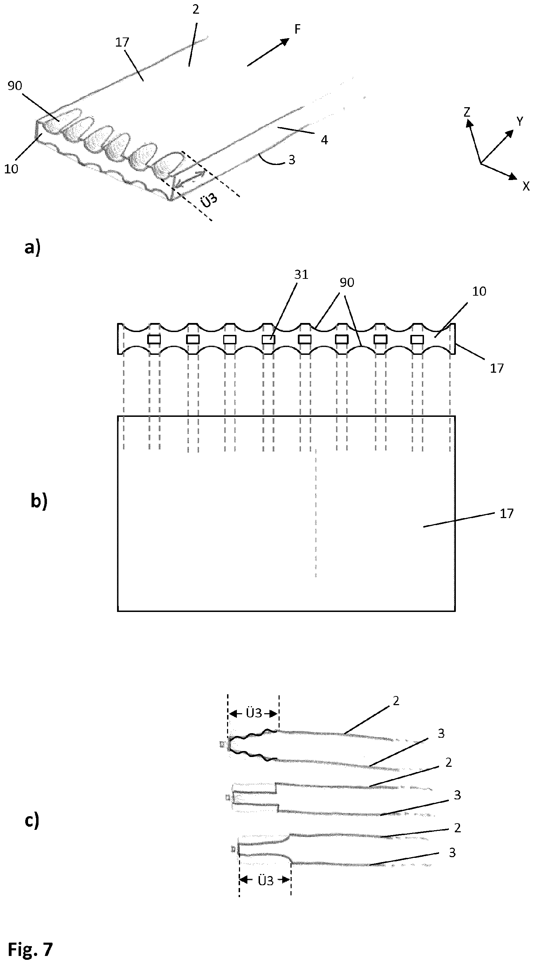

Im Folgenden wird eine Mehrzahl von Ausführungsformen von Lichtleitern einer jeweiligen erfindungsgemäßen Beleuchtungsanordnung beschrieben. In den Figuren bezeichnen gleiche Bezugszeichen gleiche Merkmale bzw. Gestaltungen. Alle in den Figuren 1a bis 6b angegebenen und mit Bezug zu diesen beschriebenen Ausführungsformen von Lichtleiterelementen weisen das in diesen Figuren nicht dargestellte Merkmal auf, dass das Lichtleiterelement im Anschluss an den zumindest einen, einer Einkoppelfläche zugeordneten Strukturierungsabschnitt in Lichtführungsrichtung bzw. senkrecht zur Einkoppelebene an zumindest einer der Hauptflächen eine zweite Strukturierung aufweist zur Erzeugung einer Homogenisierung des eingekoppelten Lichtes in Form einer von der bzw. den Einkoppelflächen ausgehenden Rillenstrukturierung, bei welcher die jeweilige Hauptfläche zumindest eine rillenförmige Ausnehmung aufweist, deren Begrenzungsfläche als Reflexionsfläche ausgebildet ist, wie es insbesondere mit Bezug auf Fig. 7 a - c beschrieben ist.

Die Figuren 1a, b zeigen ein ausgebildetes flächiges Lichtleiterelement 1 in einer Seitenansicht unter gleichzeitiger Angabe eines hier als LED-Element ausgebildeten Leuchtmittels 30 zur Gestaltung einer Beleuchtungsanordnung. Der flächige Lichtleiter 1 ist in der beschriebenen Ausführungsform quaderförmig ausgebildet, wobei die beiden Hauptseiten oder -flächen 2, 3 in ihren Flächenabmessungen sehr viel größer als die die beiden Hauptseiten verbindenden Schmalseiten 4 bis 7 sind. In der beschriebenen Ausführungsform sind alle Seiten mit Ausnahme der Einkoppel-Schmalseite 6 als grundsätzlich ebene Flächen ausgebildet. Das vom LED-Element 30 emittierte Licht wird über die, eine vorgegebene Einkoppelstruktur aufweisende Einkoppel-Schmalseite in den Lichtleiter 1 eingekoppelt, wobei die auf die Einkoppelfläche auftreffenden Lichtstrahlen beim Eintritt in den Lichtleiter durch die Brechung eine Richtungsänderung erfahren. Das im flächigen Lichtleiter 1 eingekoppelte Licht wird im weiteren Verlauf der Lichtfortpflanzung im Lichtleiter nachfolgend an den Seitenflächen des Lichtleiters zu einem großen Teil totalreflektiert, sodass sich eine Transmission des Lichtes in der in Figur 1b angegebenen Ausführungsform in eine Lichtführungsrichtung F ergibt, die hier in Hauptabstrahlrichtung des LED-Elements 30, d.h. etwa normal zur lichtabstrahlenden Oberfläche des LED-Elements liegt.

In der beschriebenen Ausführungsform liegt die Lichtführungsrichtung F etwa senkrecht zu den beiden Hauptseiten bzw. -flächen 2, 3. Je nach Ausführungsform kann das im Lichtleiter 1 transmittierende Licht an der der Einkoppel-Schmalseite 6 gegenüber liegenden Schmalseite 5 und/oder auch an einer oder beiden Hauptseiten 2, 3 ausgekoppelt werden, um beispielsweise eine vorgegebene Beleuchtungsaufgabe zu erfüllen. Zu diesem Zweck kann in solchen Oberflächenbereichen, an welchen Licht aus der Oberfläche des Lichtleiters austreten soll, eine Strukturierung, beispielsweise eine Aufrauhung oder auch eine Beschichtung vorgesehen sein, um eine Totalreflexion des Lichtes in diesem Bereich zu vermindern oder aufzuheben.

Um die Einkopplung des von dem LED-Element 30 emittierten Lichtes im Rahmen des beschriebenen Brechvorgangs des Lichtes an der Einkoppelfläche 6 so zu gestalten, dass nach dem Eintritt des Lichtes in den Lichtleiter 1 eine verbesserte Durchmischung bzw. Homogenisierung des Lichtes innerhalb des Lichtleiters erfolgt, weist die Einkoppelfläche 6 eine spezifische Gestaltung auf. Erkennbar weist die Einkoppelfläche 6 innerhalb eines Strukturierungsbereichs S in der in Figur 1a gezeigten Ebene senkrecht zu den Hauptflächen und parallel zur Lichtführungsrichtung F zu einer Einkoppelebene E, E', E" einen Neigungswinkel α auf, der ausgehend von einer Mittelebene in Richtung zu beiden Hauptflächen abnimmt, oder umgekehrt in Richtung zur Mittelebene zunimmt. Alle betrachteten Einkoppelebenen E, E', E' innerhalb des Strukturierungsbereichs S liegen parallel zueinander und senkrecht zur Mittelebene M. Wie aus dem Verlauf der in Figur 1a angegebenen Lichtstrahlen hervorgeht, werden damit auch Lichtstrahlen, die innerhalb eines Zentralbereichs Z über die Einkoppelfläche 6 in den Lichtleiter 1 eintreten, so gebrochen, dass sie flach auf eine Grenzfläche, hier eine der beiden Hauptflächen 2, 3 auftreffen und damit einer wiederkehrenden Totalreflexion an sich gegenüber liegenden Grenzflächenabschnitten des Lichtleiters 1 unterworfen werden zur verbesserten Lichtmischung innerhalb des Lichtleiters. Hierdurch kann der Anteil des Lichtes, der ohne Reflexion an den Grenzflächen durch den Lichtleiter 1 hindurch transmittiert, zur Vermeidung einer inhomogen beleuchteten Auskoppelfläche wesentlich vermindert oder gar vollständig verhindert werden. Wie insbesondere aus der Darstellung der Figur 1b hervorgeht, ist in der beschriebenen ersten Ausführungsform eines flächigen Lichtleiters 1 die Einkoppelfläche 6 zur Mittelebene M symmetrisch aufgebaut, wobei das LED-Element 30 zweckmäßigerweise mittig auf seine lichtabstrahlende Fläche 31 zur Mittelebene M orientiert ist, siehe Figur 1a. Erkennbar ändert sich der Neigungswinkel α der Einkoppelfläche zur jeweiligen Einkoppelebene E, E', E", hier ausgehend von einem Winkel α1 im Bereich des Ansatzes zur Hauptebene 2 kontinuierlich steigend bis auf den Wert α2 im Bereich der Mittelebene M, wobei sich die beiden Einkoppelflächenabschnitte 61, 62 in der Mittelebene M im Schnittpunkt 63 schneiden. In einer Ausführungsform, bei welcher die Teilsegmente 61, 62 in allen Ebenen parallel zur Seitenfläche 4 identisch sind, bilden die jeweiligen Schnittpunkte 63 eine Gerade, die auf der Mittelebene M liegt. Wie aus Figur 1b ersichtlich, sind die beiden Einkoppelflächensegmente 61, 62 spiegelsymmetrisch zur Mittelebene M ausgebildet, sodass auch die jeweiligen Neigungswinkel α1, α1' bzw. α2, α2' identisch sind. In der in den Figuren 1a, 1b gezeigten Ausführungsform liegt der Neigungswinkel α2, α2' im Bereich der Mittelebene M bei etwa 50° und nimmt in Richtung zu beiden Hauptflächen 2, 3 kontinuierlich ab. Innerhalb des Gesamtmittenbereich Z, der hier etwa die Hälfte des Abstandes zwischen den beiden Hauptflächen beträgt, beträgt der Neigungswinkel zwischen 50° und etwa 15°.

In einer nicht dargestellten Ausführungsform kann auch vorgesehen sein, dass die Neigung der Einkoppelfläche ausgehend von den Hauptflächen zur Einkoppelebene, die hier senkrecht zu den Hauptflächen liegt, zunächst identisch Null ist, d.h. parallel zur Einkoppelebene verläuft und erst beabstandet zur jeweiligen Hauptfläche einen Neigungswinkel ≠ Null aufweist, der sich in Richtung zur Mittelebene M vergrößert.

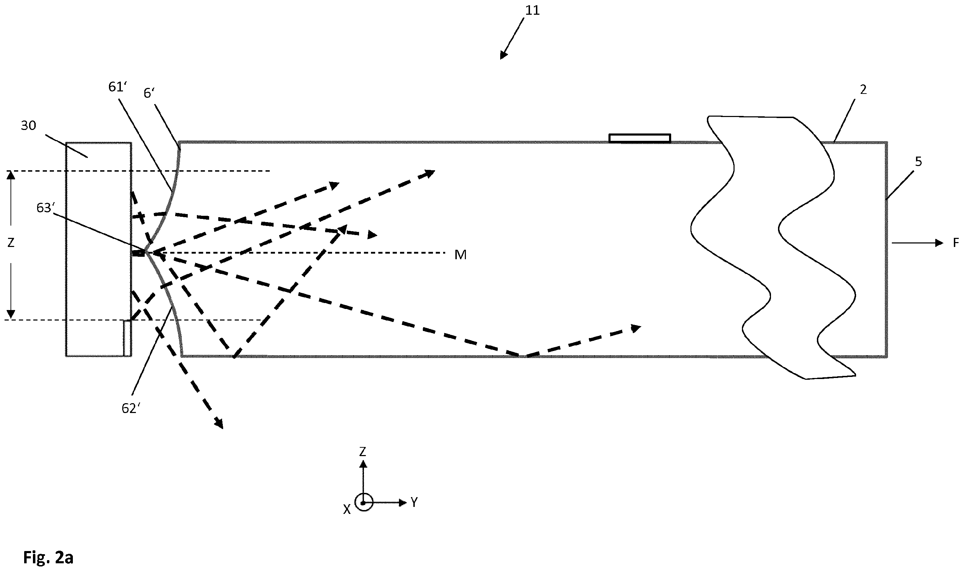

Figur 2a zeigt eine weitere Ausführungsform eines Lichtleiterelementes 11, das sich zu dem erstbeschriebenen Lichtleiter 1 in Bezug auf die Gestaltung der Einkoppelfläche unterscheidet. Auch in der in Figur 2a angegebenen Ausführungsform weist die Einkoppelfläche 6' einen zur Einkoppelebene E, E' sich in Richtung zur Mittelebene M vergrößernden Neigungswinkel α auf, sodass sich die in der Figur 2a angegebene und wiederum spiegelsymmetrisch zur Mittelebene M ausgebildete Einkoppelfläche 6' ergibt mit einer mittigen und spitz zulaufenden Auswölbung, welche durch die beiden Segmente 61', 62' gebildet ist, die sich in einem Schnittpunkt (in der dargestellten Zeichnungsebene) bzw. einer Schnittgeraden 63` schneiden. Auch bei dieser Ausführungsform wird im Zentralbereich Z auf die Einkoppelfläche 6' auftreffendes Licht gebrochen, sodass es flach auf die beiden Hauptflächen 2, 3 trifft und dort zur Verbesserung der Durchmischung des Lichtes totalreflektiert werden kann.

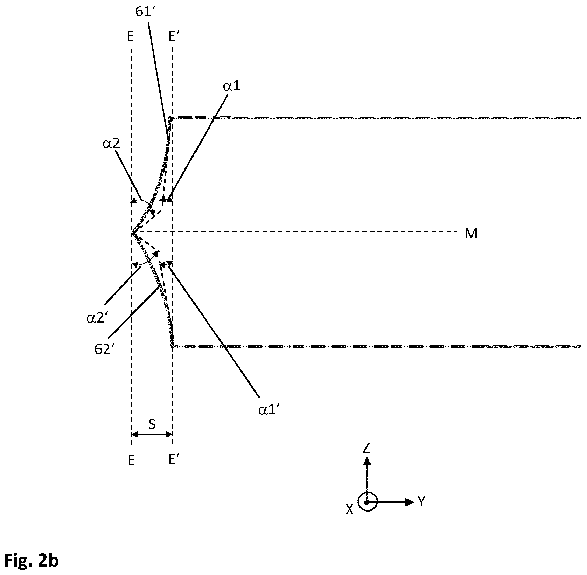

Figur 2b zeigt in einer Ansicht wie die der Figur 1b, d.h. in einer Ebene senkrecht zu den Einkoppelebenen E, E' und senkrecht zur Mittelebene M, den Verlauf der Einkoppelflächensegmenten 61', 62' zu Einkoppelebenen E, E' innerhalb des Strukturierungsabschnittes S der zweiten Ausführungsform eines Lichtleiterelements 11 mit den jeweiligen Neigungswinkein α1, α1' bzw. α2, α2'. In der in den Figuren 2a, 2b gezeigten Ausführungsform liegt der Neigungswinkel α2, α2' im Bereich der Mittelebene M bei etwa 55° und nimmt in Richtung zu beiden Hauptflächen 2, 3 kontinuierlich ab.

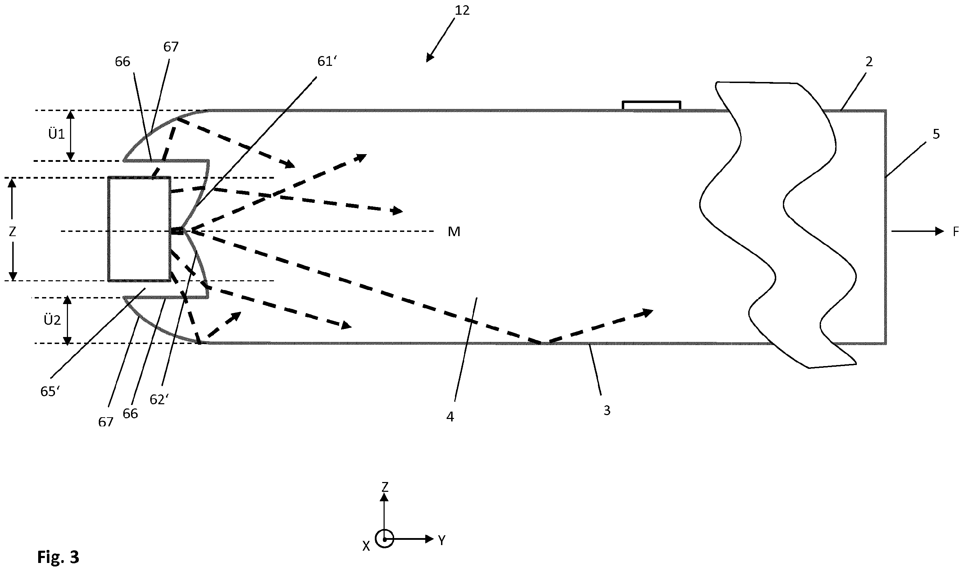

Wie aus dem in der Figur 2a untersten Strahlenverlauf ersichtlich, kann diese Ausführungsform unter Umständen den Nachteil aufweisen, dass nicht das gesamte von der Lichtquelle emittierte Licht vom Lichtleiter 1' aufgenommen wird. Eine in Bezug auf diesen Umstand verbesserte Ausführungsform eines flächigen Lichtleiterelements zeigt Figur 3 in der mit Bezug auf die vorhergehenden Ausführungsformen erläuterten Seitenansicht. Diese Ausführungsform eignet sich insbesondere in solchen Anordnungen, bei welchen das LED-Element in einen großen Winkelbereich abstrahlt bzw. auch seitlich zur Hauptstrahlrichtung, die in der in Figur 3 angegebenen Ausführungsform parallel zur Lichtführungsrichtung F verläuft. Die Einkoppelfläche 6' wird im Wesentlichen bereitgestellt durch Begrenzungsflächen einer Ausnehmung 65', die sich an der Einkoppel-Schmalseite 6' erstreckt parallel zur Lichtführungsrichtung F. Die Ausnehmung 65` ist hier U-förmig gestaltet, wobei die Einkoppelflächensegmente 61', 62' als Bodenflächenabschnitte der U-förmigen Ausnehmung ausgestaltet sind. Erkennbar sind die Einkoppelflächensegmente 61', 62' innerhalb des Zentralbereichs Z identisch wie die Einkoppelflächensegmente der Ausführungsform der Figur 2a ausgebildet und bilden damit die Bodenfläche der Ausnehmung 65'. Zur Kopplung von Licht, welches von der Lichtquelle in Seitenbereiche, d.h. quer zur Lichtführungsrichtung F abgestrahlt wird, weist das Lichtleiterelement 12 der Figur 3 an beiden Hauptflächen 2, 3 jeweils einen Übergangsabschnitt Ü1, 2 auf, welcher in der in Figur 3 angegebenen Seitenansicht jeweils weitere Einkoppelflächensegmente 66` und Übergangsflächen 67` bereitstellt. Erkennbar wird die Ausnehmung 65' zwischen den beiden Hauptflächen 2, 3 durch die zusätzlichen Einkoppelflächensegmente 66' bereitgestellt, wobei diese Flächen hier eben und parallel zu den Hauptflächen 2, 3 orientiert sind. Demgegenüber schließt sich die Übergangsfläche 67` an das Einkoppelflächenelement 66` an und geht mit einer kontinuierlichen Krümmung in die jeweilige Hauptfläche 2 bzw. 3 über. Das Lichtleiterelement 12 der Figur 3 ist durch die beschriebene Gestaltung der Ausnehmung 65, welche das LED-Element zumindest abschnittsweise aufnimmt, eingerichtet, auch seitlich abgestrahltes Licht, das nicht auf die eigentlichen Einkoppelflächensegmente 61', 62' trifft, aufzunehmen und in die Lichtführungsrichtung F umzulenken. Hierzu erfolgt zunächst eine Brechung der jeweiligen Strahlen an der zusätzlichen Einkoppelfläche 66` in das Lichtleiterelement 12 hinein und nachfolgend eine Reflexion, insbesondere eine Totalreflexion an der Übergangsfläche 67', die hierzu über einen wesentlichen Bereich ihrer Erstreckung zur jeweiligen Hauptfläche 2, 3 einen Winkel im Bereich von 45° aufweist.

Die Gestaltung der Ausnehmung 65` in der in Figur 3 angegebenen Ausführungsform eines Lichtleiterelements 12 kann bei einer Ausführungsform für ein Leuchtmittel, das eine Mehrzahl von, insbesondere in einer Reihe angeordnete LED-Elemente umfasst, in Bezug auf die Gestaltung der Ausnehmung 65` unterschiedliche Ausbildungen aufweisen. In einer Ausführungsform kann sich die Ausnehmung 65` in Längsrichtung der Einkoppelfläche durchgängig erstrecken, die in der Darstellung der Figur 3 senkrecht zur Zeichnungsebene verläuft, sodass die Ausnehmung als Nut ausgebildet ist, die insbesondere zwischen zwei Schmalseiten verlaufen kann. Bei dem in Figur 3 gezeigten Beispiel verläuft diese Nut ausgehend von der Schmalseite 4 zu der gegenüber liegenden und in der Figur abgedeckten Schmalseite. In einer weiteren Ausführungsform kann auch vorgesehen sein, dass an der Einkoppel-Schmalseite 6` in Richtung ihrer Längserstreckung beabstandete Ausnehmungen mit einer in Figur 3 dargestellten Querschnittsgestaltung vorgesehen sind, derartig, dass jede dieser Ausnehmungen zumindest abschnittsweise ein einzelnes LED-Element aufnimmt.

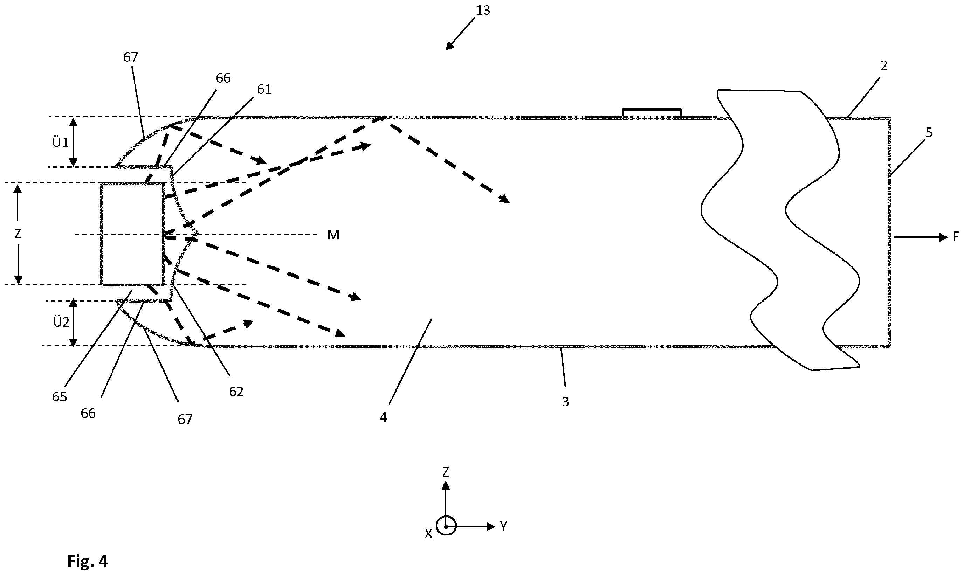

Die in Figur 4 angegebene Ausführungsform eines Lichtleiterelements 13 ist bis auf die Gestaltung der Einkoppelflächensegmente 61, 62 identisch mit der in Figur 3 angegebenen Ausführungsform. In gleicher Weise ist innerhalb des Gesamtmittenbereichs Z die Gestaltung der Einkoppelflächensegmente 61, 62 identisch mit der in Figur 1b angegebenen Ausführungsform. Darüber hinaus kann die Gestaltung der Ausnehmung 65 in gleicher Weise wie für die Ausführungsform der Figur 3 beschrieben, einerseits als Nut, die sich zwischen zwei gegenüber liegenden Schmalseiten an der Einkoppel-Schmalseite erstreckt, ausgebildet sein oder als in dieser Richtung beabstandete und getrennte, einzelne Ausnehmungen, die jeweils ein einzelnes LED-Element zumindest abschnittsweise aufnehmen zur optimierten Einkopplung des Lichtes des Leuchtmittels in das Lichtleiterelement 13.

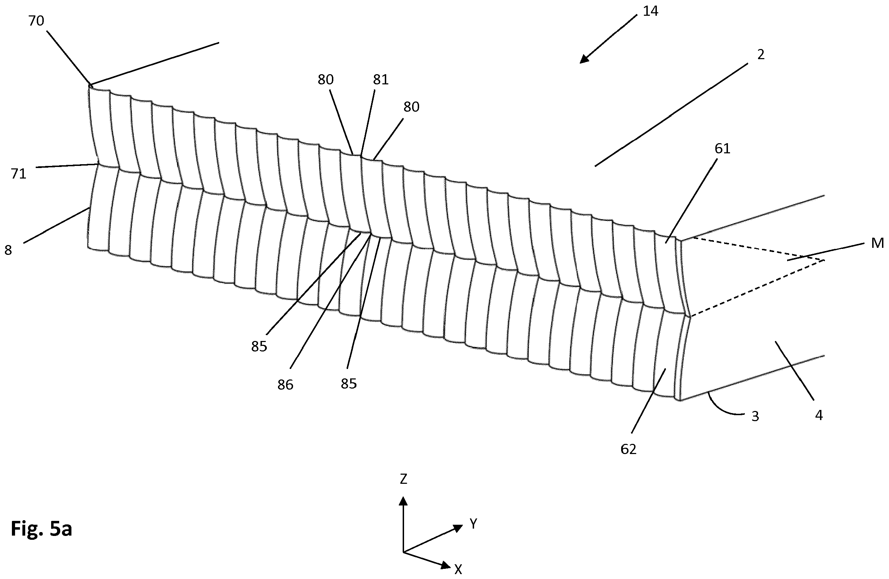

Figur 5a zeigt eine weitere Ausführungsform eines flächigen Lichtleiters 14 mit einer Schrägansicht auf die, eine Einkoppelfläche 8 bereitstellende Einkoppel-Schmalseite. Erkennbar weist die Einkoppelfläche 8 bei dieser Ausführungsform in einer Ebene parallel zur Schmalseite 4 und damit senkrecht zu einer Einkoppelebene und senkrecht zur Mittenebene M eine Gestaltung mit konvex verlaufenden Einkoppelflächensegmenten 61, 62 auf, wie sie mit Bezug auf die in Figur 1a dargestellte Ausführungsform eines flächigen Lichtleiters 1 beschrieben wurden. Die beiden Einkoppelflächensegmente 61, 62 schneiden sich dabei spitz zulaufend und schneiden in der zwischen den beiden Hauptseiten bzw. - seiten 2, 3 liegenden Mittelebene M.

Im Gegensatz zu dem Lichtleiter der Figuren 1a, 1b, bei welchem der Verlauf der Einkoppelfläche über deren gesamte Längserstreckung zwischen sich gegenüber liegenden Schmalseiten, hier der Schmalseite 4 und der dieser gegenüber liegenden Schmalseite, identisch zu dem in Figur 1a angegebenen Verlauf gestaltet ist, ist die Einkoppelfläche 8 bei dem flächigen Lichtleiter 14 der Figur 5a über seine Längserstreckung, d.h. hier in X-Richtung strukturiert. Diese Strukturierung umfasst eine wellenförmige Modulation in einer Ebene parallel zu den Hauptflächen 2, 3 bzw. der Mittelebene M, sodass sich in einer solchen Ebene jeweils eine Schnittlinie 70, 71 ergibt, die sich aus einer Vielzahl von Bogenabschnitten 80, 85 zusammensetzt, wobei sich jeweils benachbarte Bogenabschnitte in einem Schnittpunkt 81, 86 unter spitzem Winkel schneiden. In der Darstellung der Figur 5a sind diese Schnittlinien beispielhaft für die Hauptebene 2 sowie die Mittelebene M angegeben, wobei die beschriebene Modulation in der angegebenen Ausführungsform im Schnitt in jeder Ebene zwischen den beiden Hauptseiten bzw. -flächen 2, 3 vorliegt. Die Strukturierung der Einkoppelfläche 8 in deren Längsrichtung, d.h. in Richtung ihrer größten Ausdehnung, kann die Durchmischung des Lichtes nach dem Eintritt in den Lichtleiter 14 dadurch verbessern, dass das Licht aufgrund der angegebenen Bogenabschnitte in Richtung zu den der Einkoppel-Schmalseite angrenzenden Schmalseiten, hier der Schmalseite 4 und der gegenüber liegenden Schmalseite, gebrochen wird, sodass eine höhere Durchmischung des Lichtes in Längsrichtung der Einkoppelfläche erzielt wird, insbesondere die Lichtstrahlen dann an diesen Schmalseiten zur Verstärkung der Durchmischung totalreflektiert werden können. Die in Figur 5a angegebene Ausführungsform eines flächigen Lichtleiters eignet sich insbesondere zum Zusammenwirken mit einer Reihenanordnung von LED-Elementen, bei welcher die LED-Elemente etwa mittig zur Mittelebene M angeordnet sind, sodass sich die LED-Reihe parallel zur Ebene bzw. innerhalb der Ebene erstreckt. Ferner kann zweckmäßigerweise vorgesehen sein, die Abstände der LED-Anordnung an die Länge der Bogenabschnitte 80, 85 anzupassen, beispielsweise derart, dass jedes LED-Element etwa mittig zu einem Schnittpunkt 86 zweier benachbarter Bogenabschnitte 85 angeordnet ist, sodass das von diesem LED-Element ausgehende Licht in Richtung auf die beiden Hauptflächen 2, 3 als auch in Richtung auf die beiden zur Einkoppel-Schmalseite angrenzenden Schmalseiten gebrochen wird, um einen möglichst hohen Lichtanteil für die Totalreflexion an den Grenzflächen des Lichtleiters bereitzustellen bzw. den optischen Eindruck einer Reihenanordnung von beabstandeten LEDs zu vermindern.

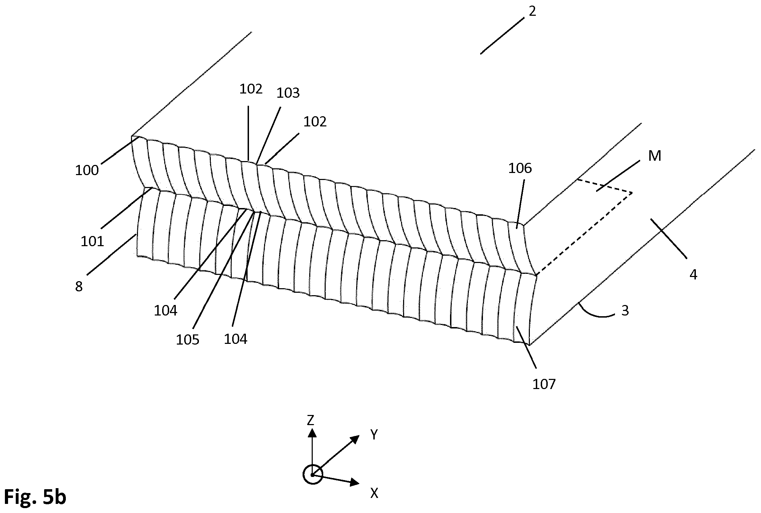

Die Figuren 5b - 5d zeigen weitere Ausführungsformen eines Lichtleiters mit einer unterschiedlichen Strukturierung der Einkoppelfläche über ihre Längserstreckung in X-Richtung. Alle Gestaltungen der Figuren 5a - 5d führen zu einer Homogenisierung des Lichtes innerhalb des Lichtleiterelements in Richtung der Längserstreckung der Einkoppelfläche. Insbesondere bei solchen Ausführungsformen, bei welchem das Leuchtmittel als Mehrzahl von in Reihe in X-Richtung benachbart zueinander beabstandete LEDs ausgebildet und angeordnet ist, führen die Gestaltungen eines ausgebildeten Lichtleiters gemäß der Figuren 5a-5d zu einer im Wesentlichen Gleichverteilung des Lichtes innerhalb des Lichtleiters in X-Richtung.

In der Ausführungsform der Fig. 5b ist die Strukturierung der Einkoppelfläche über ihre Längserstreckung in X-Richtung derart gestaltet, dass sich in einer Ebene parallel zu den Hauptflächen 2, 3 bzw. der Mittelebene M, eine Schnittlinie 100, 101 ergibt, die sich aus einer Vielzahl von konkaven Bogenabschnitten 102, 104 bzw. Einwölbungen zusammensetzt, wobei sich jeweils benachbarte Bogenabschnitte in einem Schnittpunkt 103, 105 unter spitzem Winkel schneiden. Der Schnitt der Einkoppelfläche 8 mit einer Ebene parallel zur Schmalseite 4 bzw. senkrecht zur Einkoppelfläche und senkrecht zu den Hauptflächen 2,3 kann den in Figur 1b angegebenen Verlauf aufweisen.

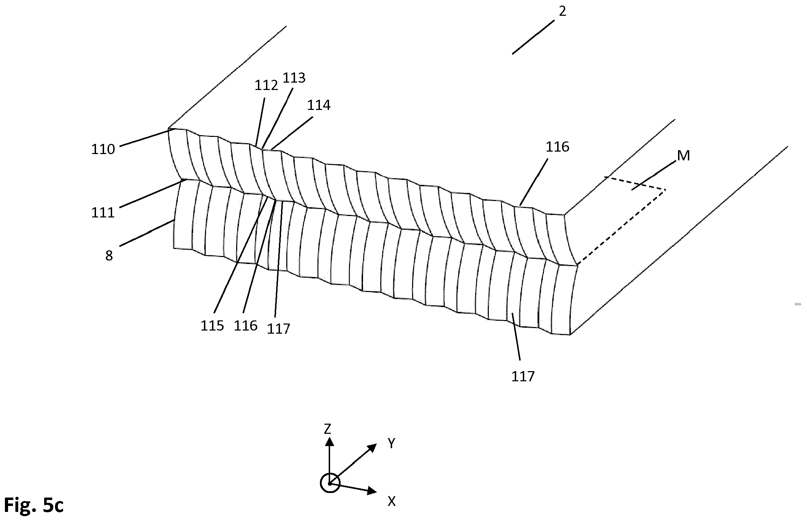

In der Ausführungsform der Fig. 5c ist die Strukturierung der Einkoppelfläche über ihre Längserstreckung in X-Richtung bei einem flächigen Lichtleiter derart gestaltet, dass sich in einer Ebene parallel zu den Hauptflächen 2, 3 bzw. der Mittelebene M, eine Schnittlinie 110, 111 ergibt, die sich aus einer Vielzahl von sich abwechselnden geraden Linienabschnitten mit negativer und positiver Steigung zusammensetzt, sodass sich eine sägezahnförmige Schnittlinie 110, 111 ergibt.

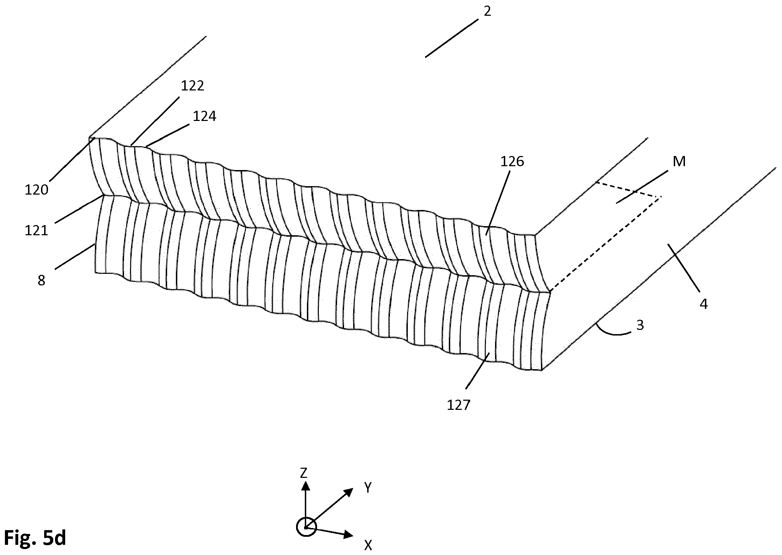

In der Ausführungsform der Fig. 5d ist die Strukturierung der Einkoppelfläche über ihre Längserstreckung in X-Richtung derart gestaltet, dass sich in einer Ebene parallel zu den Hauptflächen 2, 3 bzw. der Mittelebene M, eine Schnittlinie 120, 121 ergibt, die sich aus einer Vielzahl von sich abwechselnden konkaven und konvexen Bogenabschnitten 122, 124 zusammensetzt, sodass sich die wellenförmige Schnittlinie 120, 121 ergibt.

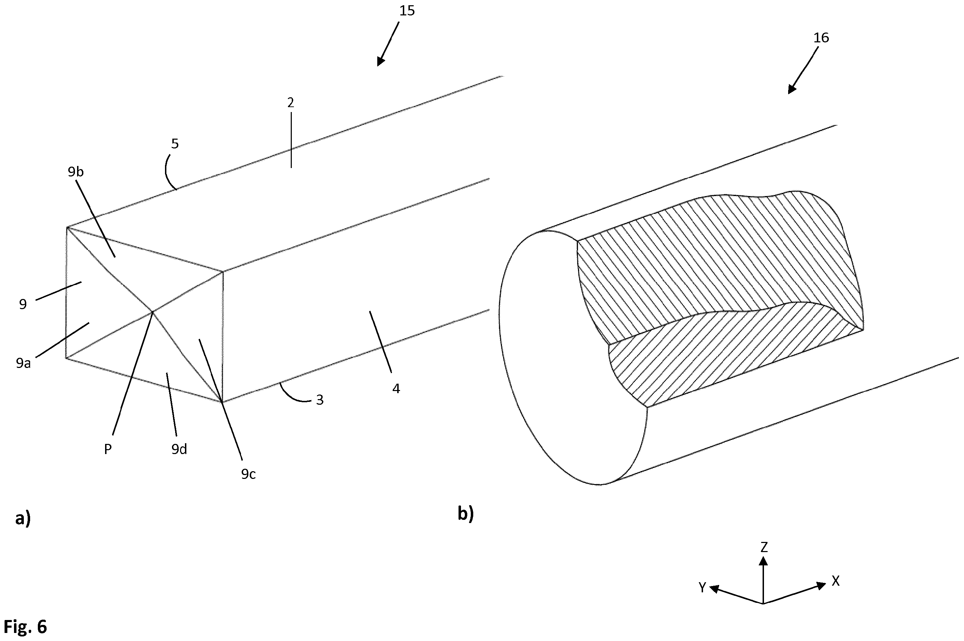

Die Figuren 6a, b zeigen gestaltete stabförmige Lichtleiter 15, 16 in einer Schrägansicht auf die Einkoppel-Schmalseite, welche in der Regel eine der beiden Stirnseiten ist. Bei dem in Figur 6a dargestellten Beispiel ist der stabförmige Lichtleiter 15 quaderförmig mit zwei gegenüber liegenden Hauptseiten 2, 3 und diese verbindenden Schmalseiten 4, 5 ausgebildet, wobei die Stirnseite 9 als Einkoppelfläche mit Einkoppelflächensegmenten 9a - d ausgebildet ist. Diese Einkoppelflächensegmenten 9a - d weisen jeweils eine dreieckförmige Begrenzung und eine konvexe Krümmung nach innen auf, sodass sich die Einkoppelflächenabschnitte 9a - d in einem Punkt P schneiden. Ein solcher Flächenlichtleiter 15 eignet sich zum Einkoppeln von Licht einer punktförmigen Lichtquelle wie eines LED-Elements, das mittig zum Schnittpunkt P vor der Einkoppelfläche 9 des Lichtleiters 15 angeordnet ist. Durch die beschriebene Gestaltung der Einkoppelfläche 9 verursachen die Einkoppelflächensegmente 9b, 9d eine verstärkte Brechung in Richtung zu den beiden Hauptflächen, die Einkoppelflächensegmente 9a, 9c eine verstärkte Brechung des Lichtes in Richtung zu den beiden Schmalseiten 4, 5 zur Verminderung des Anteils von Licht, das ohne Totalreflexion an den Grenzflächen des Lichtleiters bis zu einer nicht dargestellten Auskoppelfläche transmittiert.

Figur 6b zeigt einen stabförmigen Lichtleiter 16 mit einer zylindrischen Mantelfläche, bei welchem eine seiner Stirnseiten als Einkoppelfläche ausgebildet ist, ähnlich wie die Stirnseite 9a der Ausführungsform der Figur 6a.

Neben der in den vorstehenden Ausführungsformen eines Lichtleiterelements beschriebenen spezifischen Gestaltung der Einkoppelfläche zur Verbesserung der Lichtmischung innerhalb des Lichtleiters durch Einstellen spezifischer Einkoppelflächen für die Brechung des einfallenden Lichtes kann zum Zwecke der weiteren Verbesserung der Durchmischung eine besondere Gestaltung an zumindest einer der sich an die Einkoppelfläche bzw. -seite anschließende Grenzfläche, welche beispielsweise eine Hauptfläche bzw. -seite sein kann, vorgesehen sein. Besonders vorteilhaft kann dabei die nachfolgend beschriebene Gestaltung des Lichtleiterelements mit der in Bezug auf die Figuren 1 - 6b beschriebenen Gestaltung der Einkoppelfläche des Lichtleiters kombiniert werden. Figur 7a zeigt ein solches Lichtleiterelement 17, das im Übergang zwischen der Einkoppelfläche 10 und der Hauptfläche 2 einen Übergangsbereich Ü3 aufweist, in welchem die Hauptfläche 2 eine Strukturierung besitzt in der Form einer furchen-, rinnen- oder rinnenförmigen Strukturierung, wobei eine Mehrzahl von solchen rinnenförmigen Ausnehmungen 90 vorgesehen sind, die in Richtung zur Längserstreckung der Einkoppelfläche 10 zueinander beabstandet und parallel verlaufend zueinander verlaufend angeordnet sind. In der beschriebenen Ausführungsform sind alle rinnenförmigen Ausnehmungen 90 identisch ausgebildet in der Form, dass ihre Längsachse nicht parallel zur Lichtführungsrichtung verläuft, sondern in einem spitzen Winkel derart, dass die rinnenartige Ausnehmung 90 zum Ende des Übergangsbereichs Ü3 ausläuft, sodass sich dann daran anschließend die Hauptfläche 2 anfügt. In der beschriebenen Ausführungsform ist die jeweilige Begrenzungsfläche der rinnenartigen Ausnehmung 90 poliert, sodass diese für das sich innerhalb des Lichtleiters 17 im Übergangsbereich Ü3 fortpflanzenden Lichtes als Totalreflexionsfläche wirken und damit zur Lichtmischung innerhalb des Materials beiträgt. In der in Figur 7a angegebenen Ausführungsform sind ersichtlich im Übergangsbereich Ü3 an der Hauptseite 3, welche der Hauptseite 2 gegenüberliegt, in gleicher Weise rinnenartige Ausnehmungen 90 im Übergangsbereich Ü3 zwischen der Einkoppelfläche 10 und der Hauptfläche 3 vorgesehen, sodass auch in diesem Bereich hineingebrochenes Licht an den jeweiligen Begrenzungsflächen der rinnenartigen Ausnehmungen 90 totalreflektiert werden kann.

In der in Figur 7a gezeigten Ausführungsform weisen die rinnenartigen Ausnehmungen 90 in einer Ebene parallel zur Einkoppelebene eine U-förmige Gestalt auf. Die maximale Tiefe der Ausnehmungen kann im Bereich von einigen Millimetern bis Zentimetern liegen. Gleiches gilt für die maximale Breite in Richtung der Längserstreckung der Einkoppelfläche, d.h. der X-Achse des in Figur 7a angegebenen Koordinatensystems. Figur 7b zeigt die Anordnung von LED-Elementen zum Lichtleiterelement 17 in einer Aufsicht sowie darüber in einer Seitenansicht mit Blick auf die Einkoppelfläche 10. Erkennbar sind die hier als mehrfarbige LED-Elemente 31 ausgebildete und in einer Reihe in Längsrichtung zur Einkoppelfläche 10 angeordnete LED-Elemente jeweils zwischen den rinnenartigen Ausnehmungen 90 platziert. In der beschriebenen Ausführungsform sind die LED-Elemente 31 zur Emission von Licht ausgebildet, das mehrere unterschiedliche Wellenlängen aufweist, beispielsweise zur Bereitstellung von Weißlicht. Durch die angegebene rinnenartige Strukturierung an beiden Hauptflächen 2, 3 wird das von den LED-Elementen 31 abgegebene Licht innerhalb des Übergangsbereichs Ü3 durch die Totalreflexion an den Begrenzungsflächen der Ausnehmungen 90 besonders effektiv durchmischt, sodass bei einer nachfolgenden Auskopplung des Lichtes an einer oder mehreren, in den Figuren nicht dargestellten Auskoppelflächen, keine Farbsäume auftreten bzw. diese wesentlich reduziert sein können.

In den in den Figuren 7a - 7c dargestellten Ausführungsformen eines Lichtleiters ist die Einkoppelfläche 10 eben ausgeführt, d.h. die den jeweiligen LEDs zugeordneten (ersten) Strukturierungsabschnitte stellen ebene Einkoppelflächenabschnitte dar, die zusammen die ebene Einkoppelfläche 10 ergeben, welche sich zwischen den Hauptflächen 2, 3 erstreckt. Wie erläutert können die beschriebenen Maßnahmen bzw. Gestaltungen an der Einkoppelseite des Lichtleiters mit der sich daran anschließenden zweiten Strukturierung im Bereich einer Hauptseite bzw. Hauptfläche kombiniert werden, um eine besonders gute Durchmischung des Lichtes im Lichtleiter zu erhalten.

Die Figuren 7c zeigen Schnitte in der ZY-Ebene durch eine rinnenartige Ausnehmung 90, d.h. in einer Ebene, welche parallel zur Längsachse der Ausnehmung verläuft. Erkennbar stellt die untere Abbildung der Figur 7c einen solchen Schnitt für die rinnenartigen Ausnehmungen 90 der Figur 7a dar. Demgegenüber zeigt die mittlere Abbildung der Figur 7c eine andere Variante, bei welcher die rinnenartige Ausnehmung in Bezug auf ihre Längsachse parallel zur Lichtführungsrichtung F, d.h. parallel zur Y-Achse verläuft. Es ergibt sich der stufenförmige Übergang von der rinnenartigen Strukturierung auf die Hauptseite bzw. Hauptfläche 2.

Die obere Abbildung der Figur 7c stellt eine Ausführungsform dar, bei welcher der Verlauf der Mulde in Lichtführungsrichtung nicht wie in der unteren Abbildung gekrümmt, sondern im Wesentlichen geradlinig verläuft. In den drei in Figur 7c angegebenen Ausführungsformen kann zusätzlich vorgesehen sein, dass die rinnenartigen Ausnehmungen 90 eine Mikrostrukturierung, beispielsweise in Form einer Wellenstruktur aufweist, wie sie in der oberen Abbildung angegeben ist.

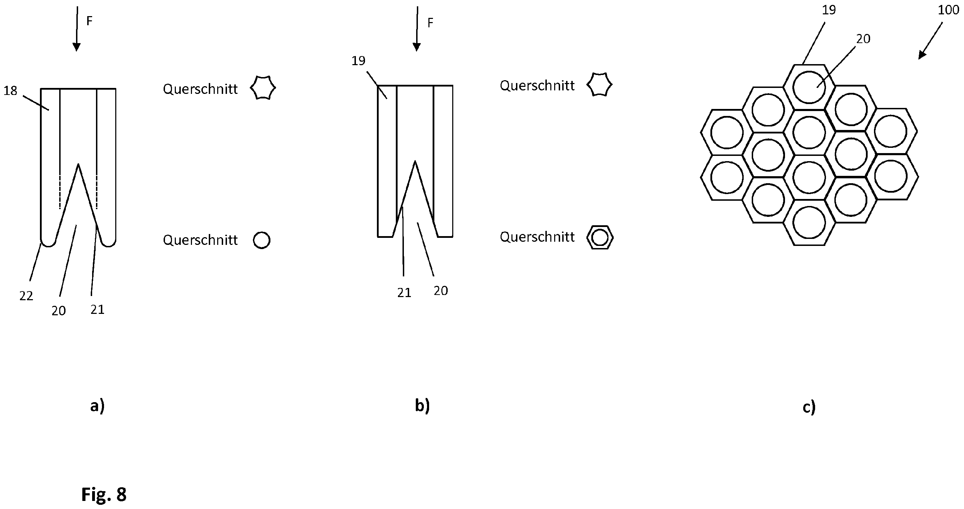

Mit Bezug auf die Figuren 8a, 8b und 8c werden weitere Ausführungsformen eines stabförmigen Lichtleiterelement 18 beschrieben, die im Bereich ihrer jeweiligen Auskoppelfläche eine besondere Strukturierung zur Optimierung der Lichtmischung innerhalb des Lichtleiterelements aufweisen. Figur 8a zeigt eine Schnittdarstellung, wobei der Schnitt parallel zur Längsachse des Lichtleiterelements verläuft in einer Teilansicht im Bereich der Auskoppelfläche. Erkennbar weist die Auskoppelfläche eine mittig angeordnete kegelförmige Ausnehmung 20 auf, deren Begrenzungsfläche eine Kegelmantelfläche 21 darstellt, an welcher das in Lichtführungsrichtung F im Lichtleiterelement 18 geführte Licht teilweise ausgekoppelt und teilweise reflektiert wird. Auf diese Weise kann der Anteil des mittig zur Auskoppelfläche ausgekoppelten Lichtes reduziert werden, um eine Homogenisierung des Lichtflusses aus der Auskoppelfläche zu erreichen. In der in Figur 8a angegebenen Ausführungsform wird die Auskoppelfläche neben der beschriebenen kegelförmigen Mantelfläche 21 durch eine konvexe Ringfläche 22 gebildet, die sich von der kegelförmigen Mantelfläche 21 radial nach außen bis auf die hier kreisförmige Seitenbegrenzung des Lichtleiterelements erstreckt. Die konvexe Ringfläche dient zur Kollimation der in diesem Bereich austretenden Lichtstrahlen.

Die in Figur 8b angegebene weitere Ausführungsform eines stabförmigen Lichtleiterelements 19 unterscheidet sich von dem der Figur 8a dadurch, dass der Querschnitt des Lichtleiterelements 19 im Bereich der Auskoppelfläche nicht kreisförmig, sondern sechseckig gestaltet ist. Diese Ausführungsform eignet sich zur Gestaltung einer Lichtführungseinrichtung 95, bei welcher eine Mehrzahl von miteinander verbundenen stabförmigen Lichtleiterelemente 19 zusammengefügt sind, die in Form einer platonischen Parkettboden eine lückenlose Auskoppelfläche bereitstellen, siehe Fig. 8c.

### Bezugszeichenliste

- 1: Flächiger Lichtleiter
- 2, 3: Hauptseite / Hauptfläche
- 4 - 7: Schmalseiten
- 6 - 9: Einkoppelfläche
- 9a - d: Einkoppelflächensegment
- 10: Einkoppelfläche
- 11, 12 13, 14: Flächiger Lichtleiter
- 15, 16: Stabförmiger Lichtleiter
- 17: Flächiger Lichtleiter
- 18, 19: Stabförmiger Lichtleiter
- 20: Kegelförmige Ausnehmung
- 21: Kegelmantelfläche
- 22: Konvexe Ringfläche
- 30, 31: LED-Element
- 61, 61': Einkoppelflächensegment
- 62, 62': Einkoppelflächensegment
- 63, 63': Schnittpunkt / Schnittlinie
- 65, 65`: Ausnehmung
- 66, 66`: Einkoppelflächensegment
- 67, 67`: Übergangsfläche
- 70, 71: Schnittlinie
- 80: Bogenabschnitt
- 81: Schnittpunkt
- 85: Bogenabschnitt
- 86: Schnittpunkt
- 90: Rillenartige Ausnehmung
- 95: Lichtführungseinrichtung
- 100,101: Schnittlinie
- 102: Bogenabschnitt
- 103: Schnittpunkt
- 104: Bogenabschnitt
- 105: Schnittpunkt
- 106, 107: Einkoppelflächensegment
- 110,111: Schnittlinie
- 112: Bogenabschnitt
- 113: Schnittpunkt
- 114: Bogenabschnitt
- 115: Schnittpunkt
- 116, 117: Einkoppelflächensegment
- 120,121: Schnittlinie
- 122: Bogenabschnitt
- 124: Bogenabschnitt
- 126, 127: Einkoppelflächensegment
- αi, αi' i=1,2: Neigungswinkel
- E, E', E": Einkoppelebene
- F: Lichtführungsrichtung
- M: Mittelebene
- S: Strukturierungsabschnitt
- Ü1,2,3: Übergangsabschnitt
- Z: Zentralbereich, Gesamtmittenbereich

## Patentansprüche

1. Beleuchtungsanordnung umfassend ein Leuchtmittel mit zumindest einem LED-Element (30, 31) und ein flächiges oder stabförmiges Lichtleiterelement (1, 11-19), wobei das Lichtleiterelement ausgebildet ist mit sich gegenüberliegenden Hauptflächen (2, 3) und diese verbindende Schmalseiten, (4-7) wobei zumindest eine der Schmalseiten zum Einkoppeln von Licht des zumindest ein LED-Element (30, 31) umfassenden Leuchtmittels ausgebildet ist, und wobei die zumindest eine Einkoppel-Schmalseite einen dem LED-Element zugeordneten Strukturierungsabschnitt (S) zur Gestaltung einer Einkoppelfläche (6, 6', 8-10) aufweist, und wobei das Lichtleiterelement im Anschluss an den zumindest einen, einer Einkoppelfläche zugeordneten Strukturierungsabschnitt (S) in Lichtführungsrichtung (F) bzw. senkrecht zur Einkoppelebene an einer der Hauptflächen (2, 3) eine zweite Strukturierung aufweist zur Homogenisierung des eingekoppelten Lichtes in Form einer von den Einkoppelflächen (6, 6', 8-10) ausgehenden Rillenstrukturierung, bei welcher die Hauptfläche (2) zumindest eine rillenförmige Ausnehmung (90) aufweist, deren Begrenzungsfläche als Reflexionsfläche ausgebildet ist, **dadurch gekennzeichnet, dass** neben der einen Hauptfläche (2) auch eine dieser gegenüberliegende Hauptfläche (3) eine zweite Strukturierung aufweist zur Homogenisierung des eingekoppelten Lichtes in Form einer von den Einkoppelflächen (6, 6', 8-10) ausgehenden Rillenstrukturierung und dass das Leuchtmittel mehrere, unterschiedliche Lichtquellen-Arten in Form von Weißlicht-LEDs umfasst, wobei die Weißlicht-LEDs unterschiedlicher Arten Weißlicht mit unterschiedlicher Farbtemperatur emittieren.

2. Beleuchtungsanordnung (1, 11-19) nach Anspruch 1, **dadurch gekennzeichnet, dass** die rillenförmige Ausnehmung (90) des Lichtleiterelements (1, 11-19) über eine vorgegebene Erstreckung in Lichtführungsrichtung (F) bzw. senkrecht zur Einkoppelebene (E, E', E") verläuft.

3. Beleuchtungsanordnung nach einem der Ansprüche 1 oder 2, **dadurch gekennzeichnet, dass** die rillenförmige Ausnehmung (90) des Lichtleiterelements (1, 11-19) einen konkaven Querschnitt aufweist.

4. Beleuchtungsanordnung nach einem der Ansprüche 1 bis 3, **dadurch gekennzeichnet, dass** die rillenförmige Ausnehmung (90) des Lichtleiterelements (1, 11-19) im Querschnitt ein Kegelschnitt darstellt.

5. Beleuchtungsanordnung nach einem der Ansprüche 1 bis 4, **dadurch gekennzeichnet, dass** die Tiefe der rillenförmigen Ausnehmung (90) des Lichtleiterelements (1, 11-19) im Laufe ihrer Erstreckung in Lichtführungsrichtung (F) bzw. senkrecht zur Einkoppelebene (E, E', E") kontinuierlich abnimmt.

6. Beleuchtungsanordnung nach einem der Ansprüche 1 bis 5, **dadurch gekennzeichnet, dass** die Begrenzungsfläche der rillenförmigen Ausnehmung (90) des Lichtleiterelements (1, 11-19) in einer Schnittebene senkrecht zur Hauptfläche (2, 3) und parallel zur Lichtführungsrichtung (F) bzw. senkrecht zur Einkoppelebene (E, E', E") eine Wellenstruktur aufweist.

7. Beleuchtungsanordnung nach einem der Ansprüche 1 bis 6, **dadurch gekennzeichnet, dass** die Rillenstrukturierung des Lichtleiterelements (1, 11-19) eine Mehrzahl von gleich ausgebildeten rillenförmigen Ausnehmungen (90) aufweist, deren Achsen parallel zueinander verlaufen.

8. Beleuchtungsanordnung nach einem der Ansprüche 1 bis 7, **dadurch gekennzeichnet, dass** die zwei Hauptflächen (2, 3) des Lichtleiterelements eine zu einer Mittelebene (M), die parallel zu zumindest einer der Hauptflächen verläuft, symmetrische Rillenstrukturierung aufweist.

9. Beleuchtungsanordnung nach einem der Ansprüche 1 bis 8, **dadurch gekennzeichnet, dass** zumindest eine der Grenzflächen des Lichtleiterelements im Wesentlichen über dessen gesamte Längserstreckung im Querschnitt konkav ausgebildet ist.

10. Beleuchtungsanordnung nach einem der Ansprüche 1 bis 9, **dadurch gekennzeichnet, dass** das Lichtleiterelement (1, 11-19) eine Auskoppelfläche aufweist, welche zumindest einen spitz nach innen zulaufenden, V-förmigen Einschnitt oder eine kegelförmige Ausnehmung (20) aufweist.

11. Beleuchtungsanordnung nach einem der Ansprüche 1 bis 10, **dadurch gekennzeichnet, dass** die Einkoppelfläche ( 6, 6', 8-10) des Lichtleiterelements (1, 11-19) einen Neigungswinkel (α1, α1', α2, α2') zu einer Einkoppelebene (E, E', E") aufweist, die in einem Mittenbereich zwischen den Hauptflächen (2, 3) ausgehend von einer Mittelebene (M) in Richtung zu einer der Hauptflächen (2, 3) abnimmt, wobei der Neigungswinkel (α1, α1', α2, α2') im Bereich der Mittelebene (M) im Intervall von ≥ 25° bis 90° liegt.

12. Beleuchtungsanordnung nach einem der Ansprüche 1 bis 11, **dadurch gekennzeichnet, dass** zumindest eine der Hauptflächen (2, 3) des Lichtleiterelements (1, 11-19) zum Auskoppeln zumindest eines Teils des eingekoppelten Lichtes ausgebildet ist.

13. Beleuchtungsanordnung) nach Anspruch 11, **dadurch gekennzeichnet, dass** der Mittenbereich des Lichtleiterelements (1, 11-19) sich ausgehend von der Mittelebene (M) in Richtung zu einer der Hauptflächen (2, 3) über eine Distanz von etwa ¼ eines Abstandes zwischen den Hauptflächen (2, 3) erstreckt.

14. Beleuchtungsanordnung nach Anspruch 11, 12 oder 13, **dadurch gekennzeichnet, dass** die Einkoppelfläche der Einkoppel-Schmalseite des Lichtleiterelements (1, 11-19) zur Mittelebene (M) spiegelsymmetrisch ausgebildet ist, sodass sich ausgehend von der Mittelebene (M) jeweils in Richtung zu einer Hauptfläche ein Mittenbereich erstreckt.

15. Beleuchtungsanordnung nach einem der Ansprüche 11 bis 14, **dadurch gekennzeichnet, dass** die Neigung der jeweiligen Einkoppelfläche zur Einkoppelebene (E, E', E") des Lichtleiterelements (1, 11-19) ausgehend von der Mittelebene (M) im Mittenbereich in Richtung zu beiden Hauptflächen (2, 3) stufenweise oder kontinuierlich abnimmt.

16. Beleuchtungsanordnung nach einem der Ansprüche 1 bis 15, **dadurch gekennzeichnet, dass** sich der Verlauf der jeweiligen Einkoppelfläche (6, 6', 8-10) des Lichtleiterelements (1, 11-19) in einer vorgegebenen Ebene aus einer Mehrzahl von aufeinanderfolgenden Kegelschnitt-Abschnitten zusammensetzt.

17. Beleuchtungsanordnung nach einem der Ansprüche 1 bis 16, **dadurch gekennzeichnet, dass** die jeweilige Einkoppelflächen (6. 6', 8-10) des Strukturierungsabschnitts (S) des Lichtleiterelements (1, 11-19) konvex ausgebildete Abschnitte umfassen.

18. Beleuchtungsanordnung nach einem der Ansprüche 1 bis 17, **dadurch gekennzeichnet, dass** die jeweiligen Einkoppelflächen (6, 6', 8-10) des Strukturierungsabschnitts (S) des Lichtleiterelements (1, 11-19) als Bodenflächenabschnitt (S) einer Ausnehmung ausgebildet sind, wobei die Ausnehmung (65, 65') zur abschnittsweisen Aufnahme des zugeordneten LED-Elements (30, 31) ausgebildet ist.

19. Beleuchtungsanordnung nach Anspruch 18, **dadurch gekennzeichnet, dass** die Ausnehmung (65, 65') eines Strukturierungsabschnitts (S) des Lichtleiterelements (1, 11-19) etwa parallel zu den benachbar-ten Hauptflächen (2, 3) des Lichtleiterelementes verlaufende und sich daran anschließende Endabschnittflächen (66, 66') aufweisen, die als weitere Einkoppelflächen wirken, wobei das über die weiteren Einkoppelflächen in das Lichtleiterelement (12) eingekoppeltes Licht zumindest teilweise zum Leiten des Lichtes in der Lichtleiterelement (12, 13) reflektiert wird.

20. Beleuchtungsanordnung nach einem der Ansprüche 1 bis 19, **dadurch gekennzeichnet, dass** das Lichtleiterelement (1, 11-19) ausgebildet ist, von einer Mehrzahl geometrisch voneinander beabstandeten und insbesondere in Reihe angeordneten LEDs (30, 31) ausgesendete Licht aufzunehmen, wobei den LEDs jeweils ein Strukturierungsabschnitt (S) zugeordnet ist zur Bereitstellung einer jeweiligen Einkoppelfläche (6, 6', 8-10) und zum Einkoppeln von Licht der jeweiligen LED (30, 31) in die zumindest eine Einkoppel-Schmalseite.

21. Beleuchtungsanordnung nach Anspruch 20, **dadurch gekennzeichnet, dass** die jeweilige Einkoppelfläche (6, 6', 8-10) der Strukturierungsabschnitte (S) des Lichtleiterelements (1, 11-19) in einer Mehrzahl von Ebenen parallel zu einer der Hauptflächen (2, 3), insbesondere in der Mittelebene (M) des Lichtleiterelementes, eine Einwölbung aufweist mit jeweils zwei konvexe Kurvenabschnitten (80, 85), die spitz zulaufen und sich in einem Mittenpunkt (81, 86) schneiden.

22. Beleuchtungsanordnung nach einem der Ansprüche 1 bis 21, mit einer zusammengesetzten Lichtführungseinrichtung (100), wobei sich diese aus einer Mehrzahl von miteinander verbundenen flächigen oder stabförmigen Lichtleiterelementen (19) zusammensetzt, die im Wesentlichen lückenlos, insbesondere in Form einer platonischen Parkettierung, angeordnet sind.

## Claims

1. Lighting arrangement comprising a luminous means with at least one LED element (30, 31) and a planar or rod-shaped light guide element (1, 11-19), wherein the light guide element is formed with opposing main surfaces (2, 3) and narrow sides (4-7) connecting these, wherein at least one of the narrow sides is designed for coupling in light of the luminous means comprising at least one LED element (30, 31), and wherein the at least one coupling narrow side has a texturing section (S) assigned to the LED element for creating a coupling surface (6, 6', 8-10), and wherein the light guide element, following the at least one texturing section (S) assigned to a coupling surface in the light guide direction (F) or perpendicularly to the coupling plane, has a second texturing on one of the main surfaces (2, 3) for homogenizing the coupled-in light in the form of a groove texture starting from the coupling surfaces (6, 6', 8-10), in which groove texture the main surface (2) has at least one groove-shaped recess (90) the boundary surface of which is designed as a reflection surface, **characterized in that**, in addition to the one main surface (2), a main surface (3) opposite the latter also has a second texturing for homogenizing the coupled-in light in the form of a groove texture starting from the coupling surfaces (6, 6', 8-10), and **in that** the luminous means comprises a plurality of different types of light sources in the form of white-light LEDs, the white-light LEDs of different types emitting white light with a different color temperature.

2. Lighting arrangement (1, 11-19) according to claim 1, **characterized in that** the groove-shaped recess (90) of the light guide element (1, 11-19) extends over a predetermined extension in the light guide direction (F) or perpendicular to the coupling plane (E, E', E").

3. Lighting arrangement according to any one of claims 1 or 2, **characterized in that** the groove-shaped recess (90) of the light guide element (1, 11-19) has a concave cross-section.

4. Lighting arrangement according to any one of claims 1 to 3, **characterized in that** the groove-shaped recess (90) of the light guide element (1, 11-19) presents a conical section in cross-section.

5. Lighting arrangement according to any one of claims 1 to 4, **characterized in that** the depth of the groove-shaped recess (90) of the light guide element (1, 11-19) continuously decreases in the course of its extension in the light guide direction (F) or perpendicular to the coupling plane (E, E', E").

6. Lighting arrangement according to any one of claims 1 to 5, **characterized in that** the boundary surface of the groove-shaped recess (90) of the light guide element (1, 11-19) has a wave structure in a sectional plane perpendicular to the main surface (2, 3) and parallel to the light guide direction (F) or perpendicular to the coupling plane (E, E', E").

7. Lighting arrangement according to any one of claims 1 to 6, **characterized in that** the groove texturing of the light guide element (1, 11-19) has a plurality of identically formed groove-shaped recesses (90) whose axes run parallel to one another.

8. Lighting arrangement according to any one of claims 1 to 7, **characterized in that** the two main surfaces (2, 3) of the light guide element have a groove texturing symmetrical to a center plane (M) running parallel to at least one of the main surfaces.

9. Lighting arrangement according to any one of claims 1 to 8, **characterized in that** at least one of the boundary surfaces of the light guide element is concave in cross-section essentially over its entire longitudinal extent.

10. Lighting arrangement according to any one of claims 1 to 9, **characterized in that** the light guide element (1, 11-19) has a decoupling surface which has at least one V-shaped incision tapering inwards or a conical recess (20) .

11. Lighting arrangement according to any one of claims 1 to 10, **characterized in that** the coupling surface (6, 6', 8-10) of the light guide element (1, 11-19) has an angle of inclination (α1, α1', α2, α2') with respect to a coupling plane (E, E', E"), which decreases in a central region between the main surfaces (2, 3) starting from a central plane (M) in the direction of one of the main surfaces (2, 3), wherein the angle of inclination (α1, α1', α2, α2') in the region of the central plane (M) lies in the interval of ≥ 25° to 90°.

12. Lighting arrangement according to any one of claims 1 to 11, **characterized in that** at least one of the main surfaces (2, 3) of the light guide element (1, 11-19) is designed to decouple at least part of the coupled light.

13. Lighting arrangement according to claim 11, **characterized in that** the center region of the light guide element (1, 11-19) extends, starting from the center plane (M), in the direction of one of the main surfaces (2, 3) over a distance of approximately ¼ of a distance between the main surfaces (2, 3).

14. Lighting arrangement according to claim 11, 12 or 13, **characterized in that** the coupling surface of the coupling narrow side of the light guide element (1, 11-19) is designed to be mirror-symmetrical with respect to the center plane (M), so that, starting from the center plane (M), a center region extends in each case in the direction of a main surface.

15. Lighting arrangement according to any one of claims 11 to 14, **characterized in that** the inclination of the respective coupling surface to the coupling plane (E, E', E") of the light guide element (1, 11-19), starting from the center plane (M), decreases stepwise or continuously in the center region in the direction of the two main surfaces (2, 3).

16. Lighting arrangement according to any one of claims 1 to 15, **characterized in that** the progression of the respective coupling surface (6, 6', 8-10) of the light guide element (1, 11-19) in a predetermined plane is composed of a plurality of successive conical-section sections.

17. Lighting arrangement according to any one of claims 1 to 16, **characterized in that** the respective coupling surfaces (6, 6', 8-10) of the texturing section (S) of the light guide element (1, 11-19) comprise convexly formed sections.

18. Lighting arrangement according to any one of claims 1 to 17, **characterized in that** the respective coupling surfaces (6, 6', 8-10) of the texturing section (S) of the light guide element (1, 11-19) are formed as a bottom surface section (S) of a recess, the recess (65, 65') being designed to receive the associated LED element (30, 31) in sections.

19. Lighting arrangement according to claim 18, **characterized in that** the recess (65, 65') of a texturing section (S) of the light guide element (1, 11-19) has end section surfaces (66, 66') which act as further coupling surfaces, the light coupled into the light guide element (12) via the further coupling surfaces being at least partially reflected for guiding the light in the light guide element (12, 13).

20. Lighting arrangement according to any one of claims 1 to 19, **characterized in that** the light guide element (1, 11-19) is designed to receive the light emitted by a plurality of LEDs (30, 31) geometrically spaced apart from one another and particularly arranged in series, the LEDs each being assigned a texturing section (S) for providing a respective coupling surface (6, 6', 8-10) and for coupling light from the respective LED (30, 31) into the at least one coupling narrow side.

21. Lighting arrangement according to claim 20, **characterized in that** the respective coupling surface (6, 6', 8-10) of the texturing sections (S) of the light guide element (1, 11-19) has a concavity in a plurality of planes parallel to one of the main surfaces (2, 3), in particular in the center plane (M) of the light guide element, with in each case two convex curve sections (80, 85) which taper to a point and intersect at a midpoint (81, 86).

22. Lighting arrangement according to any one of claims 1 to 21, having a composite light guide device (100), the latter being composed of a plurality of interconnected planar or rod-shaped light guide elements (19) which are arranged essentially without gaps, in particular in the form of a platonic parquetry.

## Revendications

1. Dispositif d'éclairage comprenant un moyen d'éclairage avec au moins un élément LED (30, 31) et un élément conducteur de lumière (1, 11-19) plan ou en forme de tige, l'élément conducteur de lumière étant réalisé avec des surfaces principales (2, 3) opposées et des côtés étroits (4-7) reliant celles-ci, au moins l'un des côtés étroits étant destiné au couplage de lumière de l'au moins un élément LED (30, 31), et l'au moins un côté étroit de couplage présentant une section de structuration (S) associée à l'élément LED pour la réalisation d'une surface de couplage (6, 6', 8-10) et l'élément conducteur de lumière présente, à la suite de l'au moins une section de structuration (S) associée à une surface de couplage dans la direction de guidage de la lumière (F) ou perpendiculairement au plan de couplage, une deuxième structuration sur l'une des surfaces principales (2, 3), pour l'homogénéisation de la lumière couplée sous la forme d'une structuration en rainures partant des surfaces de couplage (6, 6', 8-10), dans laquelle la surface principale (2) présente au moins un évidement (90) en forme de rainure dont la surface de délimitation est réalisée sous la forme d'une surface de réflexion, **caractérisé en ce que**, outre l'une des surfaces principales (2), une surface principale (3) opposée à celle-ci présente également une deuxième structuration pour l'homogénéisation de la lumière couplée sous la forme d'une structuration en rainures partant des surfaces d'injection (6, 6', 8-10) et **en ce que** le moyen d'éclairage comprend plusieurs types différents de sources lumineuses sous la forme de LED de lumière blanche, les LED de lumière blanche de différents types émettant une lumière blanche avec une température de couleur différente.

2. Dispositif d'éclairage (1, 11-19) selon la revendication 1, **caractérisé en ce que** l'évidement en forme de rainure (90) de l'élément de guidage de lumière (1, 11-19) s'étend sur une étendue prédéterminée dans la direction de guidage de lumière (F) ou perpendiculairement au plan de couplage (E, E', E").

3. Dispositif d'éclairage selon l'une des revendications 1 ou 2, **caractérisé en ce que** l'évidement en forme de rainure (90) de l'élément de guidage de lumière (1, 11-19) présente une section transversale concave.

4. Dispositif d'éclairage selon l'une des revendications 1 à 3, **caractérisé en ce que** l'évidement (90) en forme de rainure de l'élément de guidage de lumière (1, 11-19) présente une section conique.

5. Dispositif d'éclairage selon l'une des revendications 1 à 4, **caractérisé en ce que** la profondeur de l'évidement en forme de rainure (90) de l'élément de guidage de lumière (1, 11-19) diminue continuellement au cours de son extension dans la direction de guidage de lumière (F) ou perpendiculairement au plan de couplage (E, E', E").

6. Dispositif d'éclairage selon l'une des revendications 1 à 5, **caractérisé en ce que** la surface de délimitation de l'évidement en forme de rainure (90) de l'élément de guidage de lumière (1, 11-19) présente une structure ondulée dans un plan de coupe perpendiculaire à la surface principale (2, 3) et parallèle à la direction de guidage de lumière (F) ou perpendiculaire au plan de couplage (E, E', E").

7. Dispositif d'éclairage selon l'une des revendications 1 à 6, **caractérisé en ce que** la structure rainurée de l'élément de guidage de lumière (1, 11-19) présente une pluralité d'évidements (90) en forme de rainures de même configuration, dont les axes sont parallèles entre eux.

8. Dispositif d'éclairage selon l'une des revendications 1 à 7, **caractérisé en ce que** les deux faces principales (2, 3) de l'élément de guidage de lumière présentent une structuration de rainures symétrique par rapport à un plan médian (M) qui est parallèle à au moins l'une des faces principales.

9. Dispositif d'éclairage selon l'une des revendications 1 à 8, **caractérisé en ce qu'**au moins l'une des surfaces de délimitation de l'élément de guidage de lumière est concave en section transversale essentiellement sur toute son étendue longitudinale.

10. Dispositif d'éclairage selon l'une des revendications 1 à 9, **caractérisé en ce que** l'élément de guidage de lumière (1, 11-19) présente une surface de découplage qui comporte au moins une entaille en forme de V se terminant en pointe vers l'intérieur ou un évidement (20) en forme de cône.

11. Dispositif d'éclairage selon l'une des revendications 1 à 10, **caractérisé en ce que** la surface de couplage (6, 6', 8-10) de l'élément de guidage de lumière (1, 11-19) présente un angle d'inclinaison (α1, α1', α2, α2') par rapport à un plan de couplage (E, E', E"), qui diminue dans une zone centrale entre les surfaces principales (2, 3) à partir d'un plan médian (M) en direction de l'une des surfaces principales (2, 3), l'angle d'inclinaison (α1, α1', α2, α2') dans la zone du plan médian (M) étant compris dans l'intervalle de ≥ 25° à 90°.

12. Dispositif d'éclairage selon l'une des revendications 1 à 11, **caractérisé en ce qu'**au moins l'une des surfaces principales (2, 3) de l'élément de guidage de lumière (1, 11-19) est configurée pour découpler au moins une partie de la lumière couplée.

13. Dispositif d'éclairage selon la revendication 11, **caractérisé en ce que** la zone centrale de l'élément de guidage de lumière (1, 11-19) s'étend à partir du plan médian (M) en direction d'une des surfaces principales (2, 3) sur une distance d'environ ¼ d'une distance entre les surfaces principales (2, 3).

14. Dispositif d'éclairage selon la revendication 11, 12 ou 13, **caractérisé en ce que** la surface de couplage du côté étroit de couplage de l'élément de guidage de lumière (1, 11-19) est réalisée avec une symétrie spéculaire par rapport au plan médian (M), de sorte qu'une zone centrale s'étend à partir du plan médian (M) respectivement en direction d'une surface principale.

15. Dispositif d'éclairage selon l'une des revendications 11 à 14, **caractérisé en ce que** l'inclinaison de la surface de couplage respective par rapport au plan de couplage (E, E', E") de l'élément de guidage de lumière (1, 11-19) diminue par étapes ou de manière continue à partir du plan médian (M) dans la zone centrale en direction des deux surfaces principales (2, 3).

16. Dispositif d'éclairage selon l'une des revendications 1 à 15, **caractérisé en ce que** la trajectoire de chaque surface de couplage (6, 6', 8-10) de l'élément de guidage de lumière (1, 11-19) dans un plan donné se compose d'une pluralité de sections coniques successives.

17. Dispositif d'éclairage selon l'une des revendications 1 à 16, **caractérisé en ce que** les surfaces de couplage respectives (6, 6', 8-10) de la section de structuration (S) de l'élément de guidage de lumière (1, 11-19) comprennent des sections de forme convexe.

18. Dispositif d'éclairage selon l'une des revendications 1 à 17, **caractérisé en ce que** les surfaces de couplage respectives (6, 6', 8-10) de la section de structuration (S) de l'élément de guidage de lumière (1, 11-19) sont réalisées sous la forme d'une section de surface de fond (S) d'un évidement, l'évidement (65, 65') étant réalisé pour recevoir par sections l'élément LED associé (30, 31) .

19. Dispositif d'éclairage selon la revendication 18, **caractérisé en ce que** l'évidement (65, 65') d'une section de structuration (S) de l'élément de guidage de lumière (1, 11-19) s'étend à peu près parallèlement aux surfaces principales (2, 3) voisines de l'élément de guidage de lumière et se raccorde à des surfaces de section d'extrémité (66, 66') qui agissent comme d'autres surfaces de couplage, la lumière couplée dans l'élément de guidage de lumière (12) par l'intermédiaire des autres surfaces de couplage étant au moins partiellement réfléchie pour guider la lumière dans l'élément de guidage de lumière (12, 13).

20. Dispositif d'éclairage selon l'une des revendications 1 à 19, **caractérisé en ce que** l'élément de guidage de lumière (1, 11-19) est conçu pour recevoir la lumière émise par une pluralité de DEL (30, 31) géométriquement espacées les unes des autres et disposées en particulier en série, une section de structuration (S) étant associée à chacune des DEL pour fournir une surface de couplage respective (6, 6', 8-10) et pour coupler la lumière de la DEL respective (30, 31) dans ledit au moins un côté étroit de couplage.

21. Dispositif d'éclairage selon la revendication 20, **caractérisé en ce que** la surface de couplage respective (6, 6', 8-10) des sections de structuration (S) de l'élément de guidage de lumière (1, 11-19) présente, dans une pluralité de plans parallèles à l'une des surfaces principales (2, 3), en particulier dans le plan médian (M) de l'élément de guidage de lumière, un bombement avec respectivement deux sections de courbe convexes (80, 85) qui se terminent en pointe et se coupent en un point médian (81, 86).

22. Dispositif d'éclairage selon l'une des revendications 1 à 21, avec un dispositif de guidage de lumière (100) assemblé, celui-ci se composant d'une pluralité d'éléments de guidage de lumière (19) plans ou en forme de tige reliés entre eux, qui sont disposés sensiblement sans espace, en particulier sous la forme d'un parquet platonique.
